# EUROPEAN PATENT APPLICATION

(11) **EP 4 379 521 A1**
(43) Date of publication of application: **05.06.2024**
(21) Application number: 22863512.4
(22) Date of filing: 31.08.2022
(51) Int. Cl.: G06F 3/0488

(54) **WRITING/DRAWING CONTENT DISPLAY METHOD AND RELATED DEVICE**

(30) Priority: 31.08.2021 CN 202111015591
(71) Applicant: Huawei Technologies Co., Ltd., Shenzhen, Guangdong 518129 (CN)
(72) Inventor: YE, Feng, Shenzhen, Guangdong 518129 (CN); LI, Hongting, Shenzhen, Guangdong 518129 (CN); LUO, Wenshu, Shenzhen, Guangdong 518129 (CN); HUANG, Xueyan, Shenzhen, Guangdong 518129 (CN)
(74) Representative: MERH-IP Matias Erny Reichl Hoffmann Patentanwälte PartG mbB
(86) International application number: PCT/CN2022/116151
(87) International publication number: WO 2023/030377

(57) **Abstract**

A method for displaying handwritten or drawn content includes: detecting a contact gesture on the touchscreen; enabling a handwriting or drawing mode based on a fact that the contact gesture is a swipe gesture and the swipe gesture meets a preset condition; and detecting a handwriting or drawing gesture on the touchscreen, and displaying, in the target screen, handwritten or drawn content corresponding to the handwriting or drawing gesture. In this application, enabling of the handwriting or drawing mode is triggered by using a handwriting or drawing process (that is, the swipe gesture) of a user, and there is no need to deliberately search the target screen for a virtual control that is used to enable the handwriting or drawing mode, so that learning costs of the user are reduced. In addition, because a trigger condition is also a handwriting or drawing operation, the user does not sense an obvious difference before and after the handwriting or drawing mode is enabled, and the user is in a handwriting or drawing state from beginning to end, so that user experience is improved.

## Description

This application claims priority to Chinese Patent Application No. 202111015591.6, filed with the China National Intellectual Property Administration on August 31, 2021 and entitled "METHOD FOR DISPLAYING HANDWRITTEN OR DRAWN CONTENT AND RELATED DEVICE", which is incorporated herein by reference in its entirety.

### TECHNICAL FIELD

This application relates to the field of terminal software, and in particular, to a method for displaying handwritten or drawn content and a related device.

### BACKGROUND

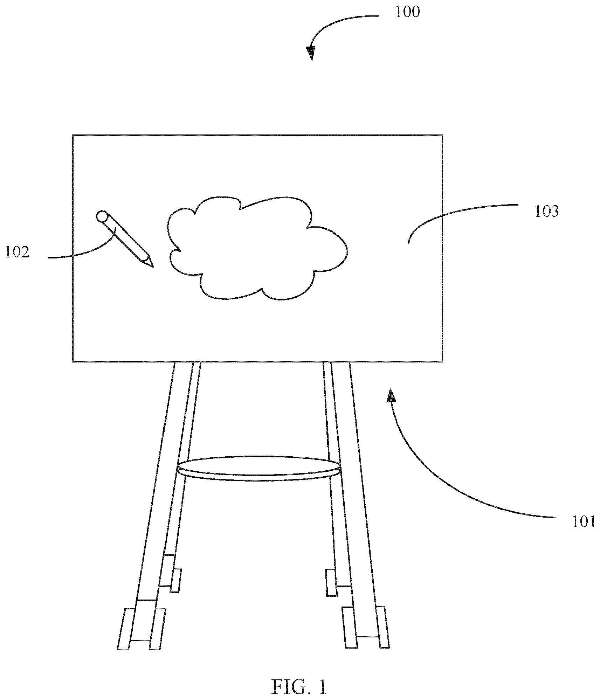

With rapid development of the internet and communication technologies, office informatization is increasingly becoming an important part of an entire IT service system. An interactive touch-control display device (for example, an interactive electronic whiteboard) that is closest to a user is prevalent, and has become standard equipment for a digital conference. As shown in FIG. 1, to implement better writing experience, a stylus is generally configured for the interactive touch-control display device, so that a user can write on a device screen conveniently.

An electronic whiteboard may be applied to a scenario in which a whiteboard screen is displayed and a scenario in which a projected screen is displayed. The whiteboard screen may support free handwriting or drawing of a user, and the projected screen may display a projected picture of an external device. In the screen projection scenario, the projected screen may be displayed on a touchscreen of an electronic device. In the screen projection scenario, the user may need to annotate with comments in the projected screen. For example, in some scenarios, the user projects a screen of a computer onto a display of a large-screen device, and the display displays the projected screen of the computer. During discussion on projected content, some conclusions or shining points that are drawn during the discussion need to be recorded in a timely manner, and need to be added to a position at which the discussion is conducted. Therefore, annotation is required.

A current manner of enabling an annotation mode (or referred to as a handwriting or drawing mode) in a projected screen is mainly setting a specific button. The handwriting or drawing mode is enabled when it is detected that a finger of a user presses the specific button, which increases cognition and perception costs of the user. In addition, a position of the button is fixed, and the button is usually far away from target content, which also increases cognition and operation costs of the user.

### SUMMARY

A first aspect of embodiments of this application provides a method for displaying handwritten or drawn content, applied to an electronic device. The electronic device includes a touchscreen, the touchscreen displays a target screen, and the method includes the following steps.

A contact gesture on the touchscreen is detected.

The target screen may be a projected screen, or an image editing screen obtained after a screenshot is taken.

A user may perform, on the touchscreen, an operation of a contact gesture that meets a specific rule, to trigger the touchscreen to enable a function of performing an annotation operation in the target screen (that is, enable a handwriting or drawing mode).

The touchscreen may include a touch-sensitive surface or a sensor/sensor group that receives input from the user based on tactile contact. "Detecting a gesture in contact with the touchscreen" may be understood as detecting a gesture in contact with the touch-sensitive surface on the touchscreen.

The handwriting or drawing mode is enabled based on a fact that the contact gesture is a swipe gesture and that the swipe gesture meets a preset condition, where the preset condition includes at least one of the following: duration of the swipe gesture exceeds a threshold, a trace length of the swipe gesture exceeds a threshold, and a trace shape of the swipe gesture is of a preset trace type.

In a possible implementation, it may be determined, based on contact information of the contact gesture, that the contact gesture is a swipe gesture. Specifically, the contact information may include a magnitude of a contact pressure and/or a change thereof. The contact pressure of the swipe gesture may be within a threshold (for example, the threshold may be used to exclude touches such as a touch by mistake and a light swipe). From a perspective of user behaviors, depending on different contact intensities and different contact areas, a side of a user hand may lightly swipe on the touchscreen (with a small contact area and a very small contact pressure), lightly press the touchscreen (with a large contact area and a medium contact pressure), or heavily press the touchscreen (with a large contact area and a large contact pressure). In this embodiment of this application, when the user lightly swipes on the touchscreen, it may be considered that the user touches the touchscreen by mistake, or when the user lightly presses the touchscreen or heavily presses the touchscreen, it may be considered that swipe gesture input of the user is detected.

In a possible implementation, the contact information may include a size of a contact region and/or a change thereof. The contact region of the swipe gesture may be a continuous region or a discrete region including dense touch points. The contact region of the swipe gesture may be a long-strip region with a specific width, where the width may be approximate to or consistent with a width of a finger. In time domain, the contact region of the swipe gesture extends along a swiping direction of the finger.

In a possible implementation, the width of the contact region is within a preset range (where a maximum value of the range cannot be excessively large, and a minimum value of the range cannot be excessively small, and the range may be set based on a feature of a human finger).

In a possible implementation, a detection module may determine that the contact gesture is a swipe gesture based on the contact information of the contact gesture and a pre-trained neural network model.

In a possible implementation, the duration of the swipe gesture may exceed the threshold, where the threshold may be 2 seconds, 2.5 seconds, 3 seconds, 3.5 seconds, or the like. An excessively small threshold may cause false enabling of the handwriting or drawing mode, and an excessively large threshold increases operation costs of enabling the handwriting or drawing mode by the user, which reduces user experience.

The reason why that the time is greater than the threshold is used as a requirement of a pre-action for enabling the handwriting or drawing mode is that a pre-action of the user during annotation is a marking action on a handwriting or drawing object, and that the marking action (for example, drawing a circle and drawing an arrow) needs to be finished within a specific period of time. Therefore, that the time is greater than the threshold is used as the requirement of the pre-action for triggering to enable the handwriting or drawing mode, so that some touch gestures generated when the user does not intend to enable the handwriting or drawing mode may be excluded.

In a possible implementation, the trace length of the swipe gesture may exceed the threshold, where the threshold may be 10 cm, 15 cm, 20 cm, or the like. It should be understood that the threshold may be related (for example, positively related) to an area of a display of the electronic device.

The reason why that the trace length is greater than the threshold is used as a requirement of a pre-action for enabling the handwriting or drawing mode is that a pre-action of the user during annotation is a marking action on a handwriting or drawing object, and that the user needs to perform the marking action to draw a handwritten or drawn pattern (for example, draw a circle and an arrow) used to mark a to-be-annotated object, where the handwritten or drawn pattern has a specific trace length. Therefore, that the trace length is greater than the threshold is used as the requirement of the pre-action for triggering to enable the handwriting or drawing mode, so that some touch gestures generated when the user does not intend to enable the handwriting or drawing mode may be excluded.

In a possible implementation, the trace shape of the swipe gesture is of the preset trace type. Optionally, the preset trace type may include a circle-type trace or an arrow-type trace. In consideration of a habit of the user, the preset trace type herein may be a shape type of a handwritten or drawn pattern that is usually drawn by the user before annotation is performed, for example, a circle, an arrow, or a trace line whose length exceeds a specified threshold.

It should be understood that the circle-type trace herein may be a strict circle (distances from points on the circle to a circle center are equal or close to equal) or an ellipse-type circle, and a shape of the handwritten or drawn pattern is not necessarily standard. Therefore, these shapes only need to be roughly detected. For example, the circle is not necessarily closed, and may be a roughly circular pattern with a gap. The arrow-type trace may also be a trace whose size is not limited and whose shape is similar to an arrow.

In addition, the preset trace type herein may alternatively be a shape similar to a triangle, a wave, or the like. This is not limited herein.

It should be understood that the trace shape herein may be understood as a distribution feature of touch points included in the contact region, and the trace shape may be determined by detecting a distribution shape of the touch points. (For example, if a group of densely distributed touch points are detected, and the touch points extend along a circle shape, it may be considered that a trace shape of a contact region is a circle-type trace).

A handwriting or drawing gesture is detected on the touchscreen, and handwritten or drawn content corresponding to the handwriting or drawing gesture is displayed in the target screen. Optionally, in an implementation, after the handwriting or drawing mode is enabled, the handwriting or drawing gesture on the touchscreen may be detected, and in response to the enabling of the handwriting or drawing mode, the handwritten or drawn content corresponding to the handwriting or drawing gesture is displayed in the target screen.

In this application, detecting the contact gesture corresponding to the pre-action is used as a trigger condition for enabling the handwriting or drawing mode, and the handwriting or drawing mode is enabled in a process of performing the pre-action or after the pre-action is finished. The manner of enabling the handwriting or drawing mode by setting the trigger condition conforms to natural thinking of a human being. Enabling of the handwriting or drawing mode is directly triggered by using a handwriting or drawing process of the user, and there is no need to deliberately search the target screen for a virtual control that is used to enable the handwriting or drawing mode, so that learning costs of the user are reduced. In addition, because the trigger condition is also a handwriting or drawing operation, the user does not sense an obvious difference before and after the handwriting or drawing mode is enabled, and the user is in a handwriting or drawing state from beginning to end. Therefore, in perception of the user, handwriting or drawing for enabling the handwriting or drawing mode is also a part of an annotation of the user, and there is no sense of pause, so that user experience is improved.

In a possible implementation, the method further includes: displaying a movement trace of the swipe gesture on the touchscreen based on a contact region of the swipe gesture on the touchscreen.

The movement trace may be displayed to provide guidance for the user to enable the handwriting or drawing mode, which facilitates understanding of the user.

In a possible implementation, the movement trace includes a start position, a first trace segment, and a second trace segment. The first trace segment and the second trace segment are different trace segments on the movement trace, a distance between the first trace segment and the start position is less than a distance between the second trace segment and the start position, and display transparency of the first trace segment is lower than display transparency of the second trace segment.

Handwriting or drawing duration and a movement distance of a touch point may be associated with opacity of a handwriting or drawing trace, and may also be associated with switching of an annotation mode. For example, it may be set that when at least one of the following conditions is met: handwriting or drawing is continuously performed for 3 seconds and the movement distance of the touch point reaches 10 cm, the opacity of the handwriting or drawing trace increases from 0 to 100%, and the handwriting or drawing mode is enabled at the same time. In other words, in a process of enabling the handwriting or drawing mode, presentation of the handwriting or drawing trace is a process in which the opacity is continuously enhanced. In the beginning, although an input point is tracked, the handwriting or drawing trace is not displayed. In other words, the handwriting or drawing trace is transparent (or does not exist) in the beginning. Subsequently, the opacity is continuously enhanced, and the handwriting or drawing trace is changed from being transparent to opaque, and is gradually obvious. When the target screen is displayed, a displayed screen may include two layers: a screen projection layer and a trace tracking layer. The screen projection layer displays the target screen, and the trace tracking layer is used to track the touch point and display the movement trace of the touch point.

The movement trace is changed from being transparent to opaque, and a natural and agile feedback manner is used to provide guidance for the user to enable the handwriting or drawing mode. This promotes understanding of the user.

In a possible implementation, the method further includes: in response to the enabling of the handwriting or drawing mode, stopping displaying the movement trace.

In a possible implementation, to prompt the user that the handwriting or drawing mode is enabled, after the handwriting or drawing mode is enabled, a target prompt may be presented in response to the enabling of the handwriting or drawing mode, where the target prompt indicates that the handwriting or drawing mode is enabled, and the target prompt includes at least one of a vibration prompt, a text prompt, a sound prompt, and a picture prompt.

In a possible implementation, a to-be-annotated object on which the user performs annotation in the target screen is usually displayed content (for example, a character or a pattern) fixed in the target screen. In a possible implementation, in response to the enabling of the handwriting or drawing mode, the content displayed in the projected screen may remain unchanged. An example in which the target screen is a projected screen is used. The projected screen is displayed based on a projection signal (indicating projected content) from another terminal, after displayed content (projected content) of the another terminal changes, the projected content indicated by the projection information also changes accordingly. However, after the handwriting or drawing mode is enabled, to make it convenient for the user to annotate with comments on the projected content fixed in the projected screen, the projected content displayed in the projected screen may remain unchanged, the unchanged projected content may be projected content that is displayed in the projected screen at a moment at which it is detected that the swipe gesture meets the preset condition (or with a very short time difference, for example, a time difference close to zero, such as 0.1s, 0.15s, or 0.2s).

In a possible implementation, a screenshot may be taken of the content displayed in the target screen to obtain a first image, and the first image is kept displayed in the target screen. Further, during handwriting or drawing, the handwritten or drawn content corresponding to the handwriting or drawing gesture may be displayed at an upper layer of the first image. Optionally, the upper layer may be a separate transparent coating that is superimposed on the first image.

In a possible implementation, pixel information of content displayed in the target screen at a target moment may be obtained, and display of the content corresponding to the pixel information is fixedly kept in the target screen. Further, during handwriting or drawing, the handwritten or drawn content corresponding to the handwriting or drawing gesture may be displayed at an upper layer of the content corresponding to the pixel information.

In a possible implementation, a target instruction may be received, where the target instruction instructs to save the handwritten or drawn content; and the first image and the handwritten or drawn content displayed at the upper layer are saved in response to the target instruction.

In a possible implementation, a target instruction may be received, where the target instruction instructs to save the handwritten or drawn content; and in response to the target instruction, a screenshot is taken of the target screen, and a second image obtained by taking the screenshot is saved.

According to a second aspect, this application provides a method for triggering a screen clearing operation, applied to an electronic device, where the electronic device includes a touchscreen, the touchscreen displays handwritten or drawn content, and the method includes:
detecting a contact gesture on the touchscreen, where the contact gesture is used to clear handwritten or drawn content that overlaps a contact region of the contact gesture from the handwritten or drawn content; and
presenting target information based on a fact that the contact gesture meets a preset condition, where the preset condition includes at least one of the following: the contact region of the contact gesture overlaps the handwritten or drawn content, the contact region of the contact gesture overlaps the handwritten or drawn content, a trace length of the contact gesture exceeds a threshold, and duration of the contact gesture exceeds a threshold, the target information indicates whether to perform the screen clearing operation, and the screen clearing operation is used to clear the handwritten or drawn content displayed on the touchscreen.

When it is determined that the contact gesture is used to clear the handwritten or drawn content that overlaps the contact region of the contact gesture from the handwritten or drawn content, a detection module may monitor a related parameter of the contact gesture, and the target information is presented when the related parameter meets a preset condition.

The target information may be a selection control used to enable a screen clearing function.

Requirements of a pre-action for presenting the target information are as follows.

### 1. Time requirement

In a possible implementation, the duration of the contact gesture may exceed the threshold, where the threshold may be 2 seconds, 2.5 seconds, 3 seconds, 3.5 seconds, or the like. An excessively small threshold may cause false presentation of the target information, and an excessively large threshold may increase operation costs of presenting the target information, which reduces user experience.

The reason why that the time is greater than the threshold is used as a requirement of the pre-action for presenting the target information is that during screen clearing, it takes a user a specific period of time to clear all the handwritten or drawn content. Therefore, that the time is greater than the threshold is used as the requirement for triggering presentation of the target information, so that an erasing gesture that is generated when the user has only an erasing intention (an intention of clearing some handwritten or drawn content) but does not have a screen clearing intention may be excluded.

When a duration parameter of erase input is monitored, the erase input may be effective erasing or ineffective erasing. Effective erasing means that an eraser moves, and a handwritten or drawn pattern is actually erased. Ineffective erasing means that the eraser moves, and the handwritten or drawn pattern is not actually erased. In case of ineffective erasing, when a palm/eraser does not move, there is erase input as long as contact between the palm and the device screen is maintained and the eraser exists from beginning to end. Therefore, collecting statistics on duration of the erase input is collecting statistics on existence time of the eraser, and is also collecting statistics on duration of contact between the palm and the device screen. However, in this case, a movement distance of touch points is zero. Certainly, movement of the eraser may alternatively be used as a necessary condition. A timer counts only when the eraser exists and moves. The timer re-counts once the eraser stops moving.

### 2. Trace length requirement

In a possible implementation, the trace length of the contact gesture (a trace length of erasing) may exceed the threshold, where the threshold may be 10 cm, 15 cm, 20 cm, or the like. It should be understood that the threshold may be related (for example, positively related) to an area of a display of the electronic device.

The reason why that the trace length is greater than the threshold is used as a requirement of the pre-action for presenting the target information is that during screen clearing, it takes a user a specific erasing distance to clear all the handwritten or drawn content. Therefore, that the trace length of the contact gesture is greater than the threshold is used as the requirement for triggering presentation of the target information, so that an erasing gesture that is generated when the user has only an erasing intention (an intention of clearing some handwritten or drawn content) but does not have a screen clearing intention may be excluded.

### 3. Contact area of the contact gesture

In a possible implementation, the contact region of the contact gesture needs to overlap the handwritten or drawn content.

The reason why that the contact region of the contact gesture needs to overlap the handwritten or drawn content is used as a requirement of the pre-action for presenting the target information is that during screen clearing, an erasing path needs to cover the handwritten or drawn content because the user needs to clear all the handwritten or drawn content. Therefore, that the contact region of the contact gesture needs to overlap the handwritten or drawn content is used as the requirement for triggering presentation of the target information, so that an erasing gesture (for example, a touch by mistake) that is generated when the user does not have a screen clearing intention may be excluded.

In this embodiment of this application, detecting the contact gesture corresponding to the erasing process may be used as a trigger condition for displaying a screen clearing option, and the screen clearing option is displayed in a process of performing the pre-action or after the pre-action is finished. Setting of the trigger condition conforms to natural thinking of a human being. Display of the screen clearing option is directly triggered by using the erasing process of the user, and there is no need to deliberately search a projected screen for the screen clearing option, which reduces learning costs of the user. There is no sense of pause in operation of the user, and this improves user experience.

In a possible implementation, the method further includes:
detecting a target gesture of a user on the touchscreen, where the target gesture instructs to perform the screen clearing operation; and
in response to the target gesture, clearing the handwritten or drawn content displayed on the touchscreen.

In a possible implementation, the target information indicates an enabling condition for performing the screen clearing operation; and the detecting a target gesture of a user on the touchscreen includes:
detecting a target gesture that is of the user on the touchscreen and that meets the enabling condition.

In a possible implementation, the enabling condition includes performing a preset quantity of tap gestures on the touchscreen.

In this embodiment, information is used to prompt that further input is required, and normal erasing is distinguished from screen clearing. If no further input is performed, normal erasing is not affected.

According to a third aspect, this application provides a method for erasing handwritten or drawn content, applied to an electronic device, where the electronic device is connected to a stylus, the electronic device includes a touchscreen, the touchscreen displays handwritten or drawn content, and the method includes:
detecting a contact gesture on the touchscreen; and
based on a fact that the stylus is in a state of being held by a stylus-holding hand, and that the contact gesture is a gesture generated when the stylus-holding hand swipes back and forth on the touchscreen, clearing, based on a contact region of the contact gesture, handwritten or drawn content that overlaps the contact region from the handwritten or drawn content.

It may be determined, in the following manner, that the stylus (or referred to as a stylus) is in a state of being held by the stylus-holding hand.

In a possible implementation, a first motion characteristic of the stylus and a second motion characteristic that is generated when the contact gesture swipes back and forth on the touchscreen may be obtained, where the first motion characteristic and the second motion characteristic are used to indicate a motion speed and/or a motion direction; and based on a fact that the first motion characteristic is consistent with the second motion characteristic, it is determined that the stylus is in a state of being held by the stylus-holding hand.

Specifically, when the back-and-forth swipe gesture is detected, and motion information of the stylus is consistent with the back-and-forth swipe gesture, it indicates that the stylus-holding hand is swiping back and forth, and it is considered that a user has an erasing intention. In this case, an eraser is evoked at a position of a set of touch points (that is, a set of touch points detected by a touch chip module) between the hand and the device screen. When a moving path of the eraser passes through a region with a handwritten or drawn pattern, a handwritten or drawn pattern on the path is erased.

In a possible implementation, when the stylus-holding hand swipes back and forth, the stylus moves together with the hand. Therefore, a sensor on the stylus may be used to sense whether the stylus is being held and whether the stylus moves together with the hand. In this way, it may be determined, by using the motion information of the stylus, whether the back-and-forth swipe gesture is operated by the stylus-holding hand. A plurality of types of sensors may be configured on the stylus. One type of sensor is used to sense whether the stylus is being held, and another type of sensor is used to sense a motion of the stylus. Further, the sensor may be used to measure a swiping speed and a swiping direction of the stylus, so as to calculate an action frequency of the back-and-forth motion of the stylus. If the action frequency is greater than a preset value (for example, 3 Hz), it is considered that the stylus is swiping back and forth, and a hand holding the stylus is the stylus-holding hand.

In this embodiment of this application, only the stylus-holding hand of the stylus can perform an erasing operation, and the other hand cannot perform the erasing operation. In other words, when the other hand swipes on the device screen, the erasing operation is not performed even if other conditions are met.

In this embodiment of this application, an erasing intention of the user is guessed by using a set of a plurality of conditions. Regarding an interaction manner, the hand does not need to move in a large range, or a stylus holding state does not need to be changed. This greatly reduces complexity and fatigue of a user operation. In addition, because the interaction manner is close to instinct habits of people, interaction memory burden is small, and creative thinking of the user is coherent. The most important thing is that this interaction manner is similar to the use of chalk (writing on a blackboard with chalk and then erasing with a finger), so that the learning barrier is low.

In a possible implementation, the method further includes:
obtaining a first motion characteristic of the stylus and a second motion characteristic that is generated when the contact gesture swipes back and forth on the touchscreen, where the first motion characteristic and the second motion characteristic are used to indicate a movement speed and/or a movement direction; and
based on a fact that the first motion characteristic is consistent with the second motion characteristic, determining that the stylus is in a state of being held by the stylus-holding hand.

In a possible implementation, a back-and-forth frequency of the back-and-forth swiping is greater than a preset frequency, where the preset frequency is greater than or equal to 3 Hz.

In a possible implementation, the erasing may be further determined in light of stress detection of the device screen. Only when a downward stress on the device screen is greater than a preset pressure (for example, 2 N), the back-and-forth swipe gesture is considered as an effective erasing gesture.

In a possible implementation, the handwritten or drawn content is content that is handwritten or drawn within a preset period of time before the contact gesture is detected. Generally, the user generates an editing intention such as erasing intention at an occasion when the handwriting or drawing is just finished, and an object to be erased is the newly generated handwritten or drawn content. Therefore, whether the handwritten or drawn content is content that is handwritten or drawn within the preset period of time before the contact gesture is detected is used as a trigger condition of the erasing operation, so that a gesture (for example, a touch by mistake) with which the user does not have an erasing intention may be excluded (that is, not responded to), or a non-erasing gesture may not be recognized as an erasing gesture.

According to a fourth aspect, this application provides an apparatus for displaying handwritten or drawn content, applied to an electronic device, where the electronic device includes a touchscreen, the touchscreen displays a target screen, and the apparatus includes:
a gesture detection module, configured to detect a contact gesture on the touchscreen;
a handwriting or drawing mode enabling module, configured to enable a handwriting or drawing mode based on a fact that the contact gesture is a swipe gesture, and that the swipe gesture meets a preset condition, where the preset condition includes at least one of the following: duration of the swipe gesture exceeds a threshold, a trace length of the swipe gesture exceeds a threshold, and a trace shape of the swipe gesture is of a preset trace type; and
a handwriting or drawing module, configured to detect a handwriting or drawing gesture on the touchscreen, and display, in the target screen, handwritten or drawn content corresponding to the handwriting or drawing gesture.

In a possible implementation, the preset trace type is a circle-type trace or an arrow-type trace.

In a possible implementation, the apparatus further includes:
a display module, configured to display a movement trace of the swipe gesture on the touchscreen based on a contact region of the swipe gesture on the touchscreen.

In a possible implementation, the movement trace includes a start position, a first trace segment, and a second trace segment, where the first trace segment and the second trace segment are different trace segments on the movement trace, a distance between the first trace segment and the start position is less than a distance between the second trace segment and the start position, and display transparency of the first trace segment is lower than display transparency of the second trace segment.

In a possible implementation, the display module is further configured to:
in response to the enabling of the handwriting or drawing mode, stop displaying the movement trace.

In a possible implementation, the apparatus further includes:
a prompt presentation module, configured to present a target prompt in response to the enabling of the handwriting or drawing mode, where the target prompt indicates that the handwriting or drawing mode is enabled, and the target prompt includes at least one of a vibration prompt, a text prompt, a sound prompt, or a picture prompt.

In a possible implementation, the display module is further configured to:
in response to the enabling of the handwriting or drawing mode, keep content displayed in the target screen unchanged.

In a possible implementation, the display module is specifically configured to:
take a screenshot of the content displayed in the target screen to obtain a first image; and
keep the first image displayed in the target screen.

In a possible implementation, the display module is specifically configured to:
display, at an upper layer of the first image, the handwritten or drawn content corresponding to the handwriting or drawing gesture.

The apparatus further includes:
receiving a target instruction, where the target instruction instructs to save the handwritten or drawn content; and
in response to the target instruction, saving the first image and the handwritten or drawn content displayed at the upper layer.

In a possible implementation, the display module is specifically configured to:
obtain pixel information of content that is displayed in the target screen at a target moment; and
fixedly keep, in the target screen, display of the content corresponding to the pixel information.

In a possible implementation, the display module is specifically configured to:
display, at an upper layer of the content corresponding to the pixel information, the handwritten or drawn content corresponding to the handwriting or drawing gesture.

The apparatus further includes:
a saving module, configured to receive a target instruction, where the target instruction instructs to save the handwritten or drawn content; and
in response to the target instruction, take a screenshot of the target screen, and save a second image obtained by taking the screenshot.

In a possible implementation, the target screen is a projected screen.

According to a fifth aspect, this application provides an apparatus for triggering a screen clearing operation, applied to an electronic device, where the electronic device includes a touchscreen, the touchscreen displays handwritten or drawn content, and the apparatus includes:
a gesture detection module, configured to detect a contact gesture on the touchscreen, where the contact gesture is used to clear handwritten or drawn content that overlaps a contact region of the contact gesture from the handwritten or drawn content; and
an information presentation module, configured to present target information based on a fact that the contact gesture meets a preset condition, where the preset condition includes at least one of the following: the contact region of the contact gesture overlaps the handwritten or drawn content, the contact region of the contact gesture overlaps the handwritten or drawn content, a trace length of the contact gesture exceeds a threshold, and duration of the contact gesture exceeds a threshold, the target information indicates whether to perform the screen clearing operation, and the screen clearing operation is used to clear the handwritten or drawn content displayed on the touchscreen.

In a possible implementation, the apparatus further includes:
a screen clearing module, configured to detect a target gesture of a user on the touchscreen, where the target gesture instructs to perform the screen clearing operation; and
in response to the target gesture, clear the handwritten or drawn content displayed on the touchscreen.

In a possible implementation, the target information indicates an enabling condition for performing the screen clearing operation, and the gesture detection module is specifically configured to:
detect a target gesture that is of the user on the touchscreen and that meets the enabling condition.

In a possible implementation, the enabling condition includes performing a preset quantity of tap gestures on the touchscreen.

According to a sixth aspect, this application provides an apparatus for erasing handwritten or drawn content, applied to an electronic device, where the electronic device is connected to a stylus, the electronic device includes a touchscreen, the touchscreen displays handwritten or drawn content, and the apparatus includes:
a gesture detection module, configured to detect a contact gesture on the touchscreen; and
an erasing module, configured to: based on a fact that the stylus is in a state of being held by a stylus-holding hand, and that the contact gesture is a gesture generated when the stylus-holding hand swipes back and forth on the touchscreen, clear, based on a contact region of the contact gesture, handwritten or drawn content that overlaps the contact region from the handwritten or drawn content.

In a possible implementation, the apparatus further includes:
an obtaining module, configured to obtain a first motion characteristic of the stylus and a second motion characteristic that is generated when the contact gesture swipes back and forth on the touchscreen, where the first motion characteristic and the second motion characteristic are used to indicate a movement speed and/or a movement direction; and
based on a fact that the first motion characteristic is consistent with the second motion characteristic, determine that the stylus is in a state of being held by the stylus-holding hand.

In a possible implementation, a back-and-forth frequency of the back-and-forth swiping is greater than a preset frequency, where the preset frequency is greater than or equal to 3 Hz.

In a possible implementation, a contact pressure between the contact gesture and the touchscreen is greater than a preset pressure.

In a possible implementation, the handwritten or drawn content is content that is handwritten or drawn within a preset period of time before the contact gesture is detected.

According to a seventh aspect, this application provides an electronic device, including: a processor, a memory, a touchscreen, and a bus. The processor, the memory, and the touchscreen are connected by using the bus.

The memory is configured to store a computer program or instructions.

The processor is configured to invoke or execute the program or the instructions stored in the memory, and is further configured to control the touchscreen to implement the steps according to any one of the first aspect and the possible implementations of the first aspect, the steps according to any one of the second aspect and the possible implementations of the second aspect, and the steps according to any one of the third aspect and the possible implementations of the third aspect.

According to an eighth aspect, this application provides a computer storage medium, including computer instructions. When the computer instructions are run on an electronic device or a server, the steps according to any one of the first aspect or the possible implementations of the first aspect, the steps according to any one of the second aspect or the possible implementations of the second aspect, and the steps according to any one of the third aspect or the possible implementations of the third aspect are performed.

According to a ninth aspect, this application provides a computer program product. When the computer program product is run on an electronic device or a server, the steps according to any one of the first aspect or the possible implementations of the first aspect, the steps according to any one of the second aspect or the possible implementations of the second aspect, and the steps according to any one of the third aspect or the possible implementations of the third aspect are performed.

According to a tenth aspect, this application provides a chip system. The chip system includes a processor, configured to support an execution device or a training device in implementing functions in the foregoing aspects, for example, sending or processing data or information in the foregoing methods. In a possible design, the chip system further includes a memory. The memory is configured to store program instructions and data that are necessary for the execution device or the training device. The chip system may include a chip, or may include a chip and another discrete component.

This application provides a method for displaying handwritten or drawn content, applied to an electronic device, where the electronic device includes a touchscreen, the touchscreen displays a target screen, and the method includes: detecting a contact gesture on the touchscreen; enabling a handwriting or drawing mode based on a fact that the contact gesture is a swipe gesture and the swipe gesture meets a preset condition, where the preset condition includes at least one of the following: duration of the swipe gesture exceeds a threshold, a trace length of the swipe gesture exceeds a threshold, and a trace shape of the swipe gesture is of a preset trace type; and detecting a handwriting or drawing gesture on the touchscreen, and displaying, in the target screen, handwritten or drawn content corresponding to the handwriting or drawing gesture. In the foregoing manner, detecting the contact gesture corresponding to the pre-action is used as a trigger condition for enabling the handwriting or drawing mode, and the handwriting or drawing mode is enabled in a process of performing the pre-action or after the pre-action is finished. The manner of enabling the handwriting or drawing mode by setting the trigger condition conforms to natural thinking of a human being. Enabling of the handwriting or drawing mode is directly triggered by using a handwriting or drawing process of the user, and there is no need to deliberately search the target screen for a virtual control that is used to enable the handwriting or drawing mode, so that learning costs of the user are reduced. In addition, because the trigger condition is also a handwriting or drawing operation, the user does not sense an obvious difference before and after the handwriting or drawing mode is enabled, and the user is in a handwriting or drawing state from beginning to end. Therefore, in perception of the user, handwriting or drawing for enabling the handwriting or drawing mode is also a part of an annotation of the user, and there is no sense of pause, so that user experience is improved.

### BRIEF DESCRIPTION OF DRAWINGS

FIG. 1 is a schematic diagram of a structure of a product according to an embodiment of this application;
FIG. 2 is a structural block diagram of an electronic device according to an embodiment of this application;
FIG. 3 is a schematic diagram of an embodiment of a method for displaying handwritten or drawn content according to an embodiment of this application;
FIG. 4 is a schematic diagram of a gesture operation according to an embodiment of this application;
FIG. 5 is a schematic diagram of a gesture operation according to an embodiment of this application;
FIG. 6 is a schematic diagram of a gesture operation according to an embodiment of this application;
FIG. 7 is a schematic diagram of a gesture operation according to an embodiment of this application;
FIG. 8 is a schematic diagram of a gesture operation according to an embodiment of this application;
FIG. 9 is a schematic diagram of a gesture operation according to an embodiment of this application;
FIG. 10 is a schematic diagram of a gesture operation according to an embodiment of this application;
FIG. 11 is a schematic diagram of a gesture operation according to an embodiment of this application;
FIG. 12 is a schematic diagram of a gesture operation according to an embodiment of this application;
FIG. 13 is a schematic diagram of a gesture operation according to an embodiment of this application;
FIG. 14 is a schematic diagram of a gesture operation according to an embodiment of this application;
FIG. 15 is a schematic diagram of a gesture operation according to an embodiment of this application;
FIG. 16 is a schematic diagram of a gesture operation according to an embodiment of this application;
FIG. 17 is a schematic diagram of a gesture operation according to an embodiment of this application;
FIG. 18 is a schematic diagram of a gesture operation according to an embodiment of this application;
FIG. 19 is a schematic diagram of an embodiment of a method for triggering a screen clearing operation according to an embodiment of this application;
FIG. 20 is a schematic diagram of a gesture operation according to an embodiment of this application;
FIG. 21 is a schematic diagram of a gesture operation according to an embodiment of this application;
FIG. 22 is a schematic diagram of a gesture operation according to an embodiment of this application;
FIG. 23 is a schematic diagram of a gesture operation according to an embodiment of this application;
FIG. 24 is a schematic diagram of a gesture operation according to an embodiment of this application;
FIG. 25 is a schematic diagram of a gesture operation according to an embodiment of this application;
FIG. 26 is a schematic diagram of a gesture operation according to an embodiment of this application;
FIG. 27 is a schematic diagram of a gesture operation according to an embodiment of this application;
FIG. 28 is a schematic diagram of an embodiment of a method for triggering a screen clearing operation according to an embodiment of this application;
FIG. 29 is a schematic diagram of a gesture operation according to an embodiment of this application;
FIG. 30 is a schematic diagram of a gesture operation according to an embodiment of this application;
FIG. 31 is a schematic diagram of a gesture operation according to an embodiment of this application;
FIG. 32 is a schematic diagram of a structure of an apparatus for displaying handwritten or drawn content according to an embodiment of this application;
FIG. 33 is a schematic diagram of a structure of an apparatus for triggering a screen clearing operation according to an embodiment of this application;
FIG. 34 is a schematic diagram of a structure of an apparatus for erasing handwritten or drawn content according to an embodiment of this application; and
FIG. 35 is a schematic diagram of a structure of a terminal device according to an embodiment of this application.

### DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

In this specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

An operating environment used as an example in this application is first described.

Embodiments of this application may be applied to a system 100 including a touchscreen 103.

As shown in FIG. 1, FIG. 1 shows a system 100 applied to embodiments of this application. The system 100 may include an electronic device 101 and a pen 102 (which may also be referred to as a stylus in embodiments of this application) associated with the electronic device 101. The electronic device 101 and the pen (or the pen device) 102 are associated or linked, so that the electronic device 101 and the pen 102 respond to each other. In an example, the pen 102 is uniquely associated with the electronic device 101, so that another pen and/or similar device does not interact with the electronic device 101 or interacts with the electronic device 101 in a different manner.

The electronic device 101 may be an electronic whiteboard (or referred to as an interactive electronic smartboard) shown in FIG. 1, and the electronic device 101 includes the touchscreen 103. It should be understood that the electronic device 101 may also be a portable mobile device including a touchscreen, for example, but not limited to a mobile or portable computing device (such as a smartphone), a personal computer, a server computer, a handheld device (such as a tablet) or a laptop device, a multiprocessor system, a game console or controller, a microprocessor-based system, a set-top box, a programmable consumer electronic product, a mobile phone, a mobile computing and/or communication device having a wearable or accessory shape factor (such as a watch, glasses, a headset, or an earplug), a network PC, a small computer, a mainframe computer, and a distributed computing environment including any of the above systems or devices.

The touchscreen 103 can recognize a contact gesture (for example, may also be referred to as a touch-control gesture or a touch gesture) of a user.

In an implementation, the touchscreen 103 may be an infrared touchscreen (infrared touchscreen). The infrared touchscreen includes infrared emission and reception sensing components installed on an outer frame of the touchscreen, and an infrared detection network is formed on a surface of the device screen. Any object that performs a touch operation may change an infrared ray on a touch point to implement a touchscreen operation. An implementation principle of the infrared touchscreen is similar to that of a surface acoustic wave touchscreen. The infrared touchscreen uses infrared emission and reception sensing components. These components form an infrared detection network on the surface of the device screen. An object (for example, a contact gesture on the touchscreen in embodiments of this application) that performs a touch operation may change an infrared ray of a touch point, and then an infrared signal is converted into a coordinate position of a touch point, so that the touch gesture is recognized.

In an implementation, the touchscreen 103 may be a capacitive touchscreen, and the capacitive touchscreen works by using current sensing of a human body. For example, the capacitive touchscreen may be a four-layer composite glass screen. An inner surface and an interlayer of the glass screen are each coated with one layer of ITO (nano-indium tin metal oxide). An outermost layer is a thin silicone glass protective layer. An interlayer ITO coating is used as a working surface. Four electrodes are led out from four corners. Inner layer ITO is a shield layer, which can ensure a good working environment. When a finger of the user touches a metal layer, a coupling capacitor is formed between the user and a surface of the touchscreen due to a human body electric field. For a high frequency current, the capacitor is a direct conductor. Therefore, the finger sucks a very small current from a touch point. The current flows out separately from the electrodes on the four corners of the touchscreen, and currents flowing through the four electrodes are proportional to distances from the finger to the four corners. A controller obtains a position of the touch point by accurately calculating a ratio of the four currents, so as to recognize the touch gesture.

It should be understood that the touchscreen 103 may alternatively be another type of touchscreen that has a contact gesture recognition capability, or may be replaced with a touchscreen that has only a display function but can cooperate with another external device (for example, a sensor) to implement contact gesture recognition. This is not limited herein.

In an example, the pen 102 may also interact with the touchscreen 103 by touching the touchscreen 103 or in another manner, to provide input for the electronic device 101.

In an example, the pen 102 is an active electronic pen (for example, an active stylus), and includes an electronic component that enables the pen 102 to interact with the electronic device 100, a user of the pen 102, another electronic device, and the like. For example, in some examples, the pen 102 includes a wireless interface that enables the pen 102 to wirelessly communicate with the electronic device 101 (via Wi-Fi, cellular, and short-range wireless communication protocols, other radio frequency communication, or the like) even if the pen 102 is not in contact with the electronic device 101. In addition, in some examples, the pen 102 includes one or more of a button, a switch, and/or another input interface used by a user of the pen 102 to interact with the pen 102 and/or an electronic component of the pen 102. Additionally or alternatively, the pen 102 may include a pressure sensor, a motion sensor, an accelerometer, a gyro sensor, and the like that can detect a motion, a direction, an angle, user input, a posture, and the like of the pen 102.

The touchscreen 103 may display a pattern and a text, and may further provide a handwriting or drawing screen for the user to freely write and draw, for example, a whiteboard screen provided by an electronic whiteboard or a sketchpad provided by an application (application, APP).

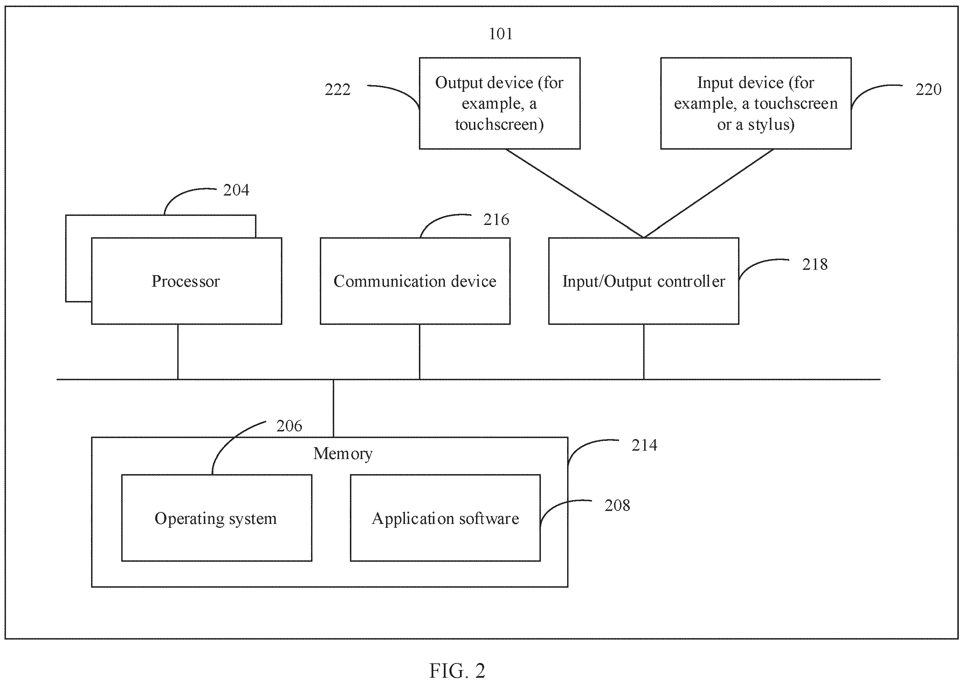

As shown in FIG. 2, FIG. 2 is a schematic diagram of a structure of an electronic device 101 according to an embodiment of this application.

It may be understood that the structure shown in FIG. 2 does not constitute any specific limitation on the electronic device 101. In some other embodiments of this application, the electronic device 101 may include more or fewer components than those shown in the figure, or combine some components, or split some components, or have different component arrangements. The components shown in the figure may be implemented by hardware, software, or a combination of software and hardware.

The electronic device 101 may include an input/output controller 218. The input/output controller 218 may output information to one or more output devices 222 (for example, a touchscreen or a speaker) that are separated from or integrated into the electronic device 101. The input/output controller 218 may be further configured to receive input from one or more input devices 220 (for example, a keyboard, a microphone, a stylus, or a touchscreen). In an embodiment, the output device 222 may also act as the input device 220. An example of such a device may be a touchscreen. In some embodiments, a user may provide input for the input device 220 and/or receive output from the output device 222.

In this embodiment of this application, the input device 220 may be a stylus (for example, the pen 102). A user operates the stylus to provide input for the input/output controller 218. The input/output controller 218 may transfer the input to a processor, and the processor 204 performs processing. It should be understood that the stylus may further communicate with the electronic device 101 by using a network interface (not shown in FIG. 2) of the electronic device 101.

In an example, the input/output controller 218 may detect the presence of the pen 102, and recognize and parse the input provided by the pen 102. The input may be in various different forms, for example, movement of the pen 102 on the touchscreen, pressing and tapping on a panel of a digitizer, and drawing a line.

In this embodiment of this application, the input device 220 may be a touchscreen. A user provides gesture input for the input/output controller 218 by touching the touchscreen by using a side of a hand. The input/output controller 218 may transfer the gesture input to the processor, and the processor 204 performs processing.

The electronic device 101 may include one or more processors 204. The processors may include one or more processing units. For example, the processor 204 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processor (neural-network processing unit, NPU). Different processing units may be independent components, or may be integrated into one or more processors.

A controller of the processor 204 may generate an operation control signal based on an instruction operation code and a time sequence signal, to complete control of instruction reading and instruction execution.

A memory may be further disposed in the processor 204, and is configured to store instructions and data. In some embodiments, the memory in the processor 204 is a cache. The memory may store instructions or data that has been used or cyclically used by the processor 204. If the processor 204 needs to use the instructions or the data again, the processor may directly invoke the instructions or the data from the memory. This avoids repeated access, reduces waiting time of the processor 204, and improves system efficiency.

In some embodiments, the processor 204 may include one or more interfaces. For example, the interface may include, but is not limited to, a mobile industry processor interface (mobile industry processor interface, MIPI), an external memory interface, and/or a universal serial bus (universal serial bus, USB) interface.

The MIPI interface may be configured to connect the processor 204 to a peripheral component such as a touchscreen. The MIPI interface may include a display serial interface (display serial interface, DSI) and the like. The processor 204 communicates with the touchscreen by using the DSI interface, to implement a display function of the touchscreen.

It may be understood that an interface connection relationship between the modules shown in this embodiment is merely an example for description, and does not constitute a limitation on the structure of the electronic device 101. In some other embodiments of this application, the electronic device 101 may alternatively use an interface connection manner different from that in the foregoing embodiment, or use a combination of a plurality of interface connection manners.

The electronic device 101 may implement a display function by using the GPU, the touchscreen, the application processor, and the like. The GPU is a microprocessor for image processing, and is connected to the touchscreen and the application processor. The GPU is configured to perform mathematical and geometric computation, and render an image. The processor 204 may include one or more GPUs that execute program instructions to generate or change display information. Specifically, the one or more GPUs in the processor 204 may implement a rendering task of an image (for example, a rendering task related to handwritten or drawn content, a movement trace of a swipe gesture on the touchscreen, and the like in this application, and transfer a rendering result to the application processor or another display driver, and the application processor or the another display driver triggers the display to display the handwritten or drawn content, the movement trace, and the like).

The touchscreen may include a display and a related sensor (for example, a pressure sensor and a touch sensor).

The display is configured to display an image, a video, and the like. The display includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like.

The pressure sensor is configured to sense a pressure signal, and can convert the pressure signal into an electrical signal. There are many types of pressure sensors such as a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The electronic device 101 may determine an intensity of pressure based on the change in the capacitance. When a touch operation is performed on the touchscreen, the electronic device 101 may detect an intensity of the touch operation by using the pressure sensor. The electronic device 101 may also calculate a touch position based on a detection signal of the pressure sensor. In some embodiments, touch operations that are performed in a same touch position but have different touch operation intensities may correspond to different operation instructions.

The touch sensor is also referred to as a "touch component". The touch sensor may be disposed on the touchscreen, and the touch sensor and the display constitute the touchscreen. The touch sensor is configured to detect a touch operation performed on or near the touch sensor. The touch sensor may transfer the detected touch operation to the application processor to determine a type of the touch event. Visual output related to the touch operation may be provided by using the display. In some other embodiments, the touch sensor may be alternatively disposed on a surface of the electronic device 101, and is at a position different from that of the display.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 101 may be implemented by using the NPU. For example, a task of recognizing a touch gesture type may be implemented based on the NPU.

The external memory interface may be configured to connect to an external storage card such as a micro SD card, to extend a storage capability of the electronic device 101. The external memory card communicates with the processor 204 by using the external memory interface, to implement a data storage function. For example, files such as music and a video may be stored in the external storage card.

The memory 214 may be configured to store computer-executable program code, and the executable program code includes instructions. The memory 214 may include a program storage area and a data storage area. The program storage area may store an operating system 206, application software 208 (such as an image playback function) required by at least one function, and the like. The data storage area may store data (for example, audio data) and the like created when the electronic device 101 is used. In addition, the memory 214 may include a high-speed random access memory, or may include a nonvolatile memory, for example, at least one magnetic disk storage device, a flash memory, or a universal flash storage (universal flash storage, UFS). The processor 204 runs instructions stored in the memory 214 and/or instructions stored in the memory disposed in the processor, to perform various function applications of the electronic device 101 and data processing.

The method described in embodiments of this application may be code stored in the memory 214 (or an external memory), and the processor 110 may obtain the code in the memory to implement the method provided in embodiments of this application.

Alternatively, the electronic device 101 may interact with another electronic device by using a communication device 216.

It is understood that alternatively or additionally, the methods described herein may be performed, at least in part, by one or more hardware logic components. For example and not limitation, illustrative types of the hardware logic components that can be used include a field programmable logic gate array (field programmable gate array, FPGA), an application specific integrated circuit (application specific integrated circuit, ASIC), an application specific standard part (application specific standard parts, ASSP), a system on chip (system on chip, SOC), a programmable logic device (programmable logic device, PLD), and the like. For example, functions such as contact gesture detection and gesture type determining may be implemented based on a hardware logic component.

In addition, at least some functions of various elements in the accompanying drawings may be performed in a distributed manner by other elements in the accompanying drawings or entities (for example, a processor, a web service, a server, an application program, and a computing device) that are not shown in the accompanying drawings, which is not limited herein.

For ease of understanding, with reference to the accompanying drawings and application scenarios, a method for displaying handwritten or drawn content provided in an embodiment of this application is specifically described.

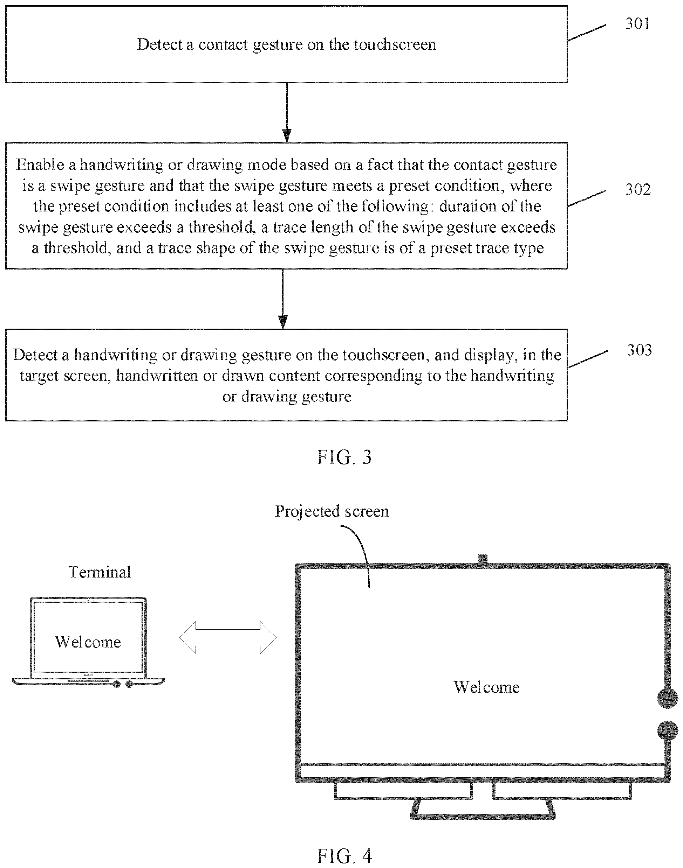

As shown in FIG. 3, FIG. 3 is a schematic flowchart of a method for displaying handwritten or drawn content according to an embodiment of this application. As shown in FIG. 3, the method for displaying handwritten or drawn content according to this embodiment of this application includes the following steps.

301: Detect a contact gesture on the touchscreen.

An electronic device may be applied to a scenario in which a whiteboard screen is displayed and a scenario in which a target screen (or another non-editable screen, for example, a target screen in this application, and for convenience, the following uses an example in which the target screen is a projected screen for description) is displayed. The whiteboard screen may support free handwriting or drawing of a user, and the projected screen may display a projected picture of an external device. In a screen projection scenario, a projected screen may be displayed on the touchscreen of the electronic device. In the screen projection scenario, the user may need to annotate with comments in the projected screen. For example, in some scenarios, the user projects a screen of a computer onto a display of a large-screen device, and the display displays the projected screen of the computer. During discussion on projected content, some conclusions or shining points that are drawn during the discussion need to be recorded in a timely manner, and need to be added to a position at which the discussion is conducted. Therefore, annotation is required.

As shown in FIG. 4, FIG. 4 is a schematic diagram of projecting a screen of a terminal. In the projected screen, handwriting is usually not supported. The projected screen is similar to a projector, and is mainly used for sharing/enlarging the screen of the terminal. Therefore, when the projected screen is displayed, a large-screen office device is equivalent to a display device. Input of the user such as swiping and handwriting or drawing on the large-screen office device does not cause any image change.

In this embodiment of this application, the user may perform, on the touchscreen, an operation of a contact gesture that meets a specific rule, to trigger the touchscreen to enable a function of performing an annotation operation on the projected screen (that is, enable a handwriting or drawing mode).

The following first describes the contact gesture.

In this embodiment of this application, the electronic device 101 may detect a gesture in contact with the touchscreen.

The touchscreen may include a touch-sensitive surface or a sensor/sensor group that receives input from the user based on tactile contact. "Detecting a gesture in contact with the touchscreen" may be understood as detecting a gesture in contact with the touch-sensitive surface on the touchscreen.

First, a device and a module related to detection of a gesture in contact with the touchscreen are described.

In a possible implementation, the touchscreen may cooperate with a detection module to detect a contact gesture on the touchscreen. The detection module may be a program, a data structure, or a data structure subset that is related to contact gesture detection and that is stored in a memory. Alternatively, one part of the detection module exists in a memory in a form of a program, a data structure, or a data structure subset, and the other part of the detection module is in a form of a hardware logic module. The touchscreen may capture contact data, and the detection module may perform, based on the contact data, various actions related to contact gesture detection.

In a possible implementation, the touchscreen may capture contact data (for example, an electrical signal) between the user and the touch-sensitive surface in real time, and transfer the contact data to the detection module. The detection module may perform, based on the contact data, various actions related to contact gesture detection.

The following describes detection implemented by the detection module on the contact gesture on the touchscreen.

In an implementation, the detection module may determine, based on the contact data, a magnitude of an intensity generated when the user comes into contact with the touchscreen and/or a change thereof, and a size of a contact region and/or a change thereof, so as to determine a gesture type of the contact gesture based on the foregoing information.

The "intensity" may be understood as a force or pressure (force per unit area) of contact (for example, contact by using a side of a hand) on the touch-sensitive surface of the touchscreen. The contact pressure may be determined by using a plurality of methods and a plurality of sensors or a combination of sensors. For example, forces at different points on the touch-sensitive surface of the touchscreen are measured below the touch-sensitive surface, for example, by using one or more sensors adjacent to the touch-sensitive surface. In some specific implementations, the contact pressure may be determined by combining (for example, performing weighted averaging on) force measurements that are from a plurality of sensors. In addition, a size of a contact region detected on the touch-sensitive surface and/or a size change, a capacitance of the touch-sensitive surface near the contact region and/or a capacitance change, and/or a resistance of the touch-sensitive surface near the contact region and/or a resistance change may be further used to indirectly represent a contact force or pressure on the touch-sensitive surface.

The "contact region" may be understood as a region that can be detected and that is in contact with the touch-sensitive surface. The region may be a continuous region or a discrete region including dense touch points (for example, the contact region may be a long strip region including a group of densely distributed touch points).

The detection module may execute, based on the contact data, various actions related to contact gesture detection, so as to determine a gesture type of the contact gesture, movement of the contact gesture, stopping of the contact gesture, and the like.

For example, the detection module may determine whether a touch has occurred and a type of the contact gesture (for example, detect a finger pressing event), determine whether a touch movement exists and track movement on the touch-sensitive surface (for example, detect a swiping event of one or more fingers), and determine whether the touch has stopped (for example, detect a finger lifting event).

The foregoing "movement of the contact gesture" may also be referred to as movement of a contact region of the contact gesture, and data related to the movement of the contact region may include but is not limited to a rate (a magnitude), a speed (a magnitude and a direction), and/or an acceleration (a change of a magnitude and/or a direction) of the movement of the contact region.

Further, the detection module may perform, based on the contact data, various actions related to the contact gesture detection, so as to determine a gesture type indicated by the contact gesture, where the gesture type is, for example, but is not limited to, tap, double-tap, touch and hold, and swipe.

In a possible implementation, the detection module may be a pre-trained neural network model, and the neural network model has a capability of recognizing, based on contact data of the contact gesture, a gesture type indicated by the contact gesture.

302: Enable a handwriting or drawing mode based on a fact that the contact gesture is a swipe gesture and that the swipe gesture meets a preset condition, where the preset condition includes at least one of the following: duration of the swipe gesture exceeds a threshold, a trace length of the swipe gesture exceeds a threshold, and a trace shape of the swipe gesture is of a preset trace type.

In a possible implementation, the detection module may determine, based on contact information of the contact gesture, that the contact gesture is a swipe gesture.

Specifically, the contact information may include a magnitude of a contact pressure and/or a change thereof. The contact pressure of the swipe gesture may be within a threshold (for example, the threshold may be used to exclude touches such as a touch by mistake and a light swipe). From a perspective of user behaviors, depending on different contact intensities and different contact areas, a side of a user hand may lightly swipe on the touchscreen (with a small contact area and a very small contact pressure), lightly press the touchscreen (with a large contact area and a medium contact pressure), or heavily press the touchscreen (with a large contact area and a large contact pressure). In this embodiment of this application, when the user lightly swipes on the touchscreen, it may be considered that the user touches the touchscreen by mistake, or when the user lightly presses the touchscreen or heavily presses the touchscreen, it may be considered that swipe gesture input of the user is detected.

The swipe gesture may be generated by movement of a press gesture of the user on the touchscreen. The press gesture may include light pressing and heavy pressing. The contact pressure increases from an intensity smaller than a light pressing intensity threshold to an intensity between the light pressing intensity threshold and a heavy pressing intensity threshold, which may be referred to as detecting "light pressing" input on a touch surface. The contact pressure increases from an intensity smaller than the heavy pressing intensity threshold to an intensity greater than the heavy pressing intensity threshold, which may be referred to as detecting "heavy pressing" input on the touch surface. The contact pressure increases from an intensity smaller than a contact detection intensity threshold to an intensity between the contact detection intensity threshold and the light pressing intensity threshold, which may be referred to as detecting "light-swiping touch" input on the touch surface. The contact pressure decreases from an intensity greater than the contact detection intensity threshold to an intensity smaller than the contact detection intensity threshold, which may be referred to as detecting that the hand is lifted from the touch surface (that is, a hand lifting gesture). In some implementation solutions, the contact detection intensity threshold is zero. In some implementations, the contact detection intensity threshold may be greater than zero.

Specifically, the contact information may include a size of a contact region and/or a change thereof. The contact region of the swipe gesture may be a continuous region or a discrete region including dense touch points. The contact region of the swipe gesture may be a long-strip region with a specific width, where the width may be approximate to or consistent with a width of a finger. In time domain, the contact region of the swipe gesture extends along a swiping direction of the finger.

The width of the contact region is within a preset range (where a maximum value of the range cannot be excessively large, and a minimum value of the range cannot be excessively small, and the range may be set based on a feature of a human finger).

In a possible implementation, the detection module may determine that the contact gesture is a swipe gesture based on the contact information of the contact gesture and a pre-trained neural network model.

In a possible implementation, the handwriting or drawing mode may be enabled when the swipe gesture meets a requirement (that is, meets the foregoing preset condition) of a pre-action for triggering to enable the handwriting or drawing mode.

For a requirement of the pre-action for triggering to enable the handwriting or drawing mode, when a user needs to perform handwriting or drawing, a first selection is to write by using a pen (instead of searching for a virtual key) due to human habituality. In addition, before annotation is formally performed, there may be some pre-actions, where the pre-action may be marking, by the user, a region in which a to-be-annotated object is located. For example, before annotation is performed, a keyword (or a pattern) to-be-annotated is circled, and then an arrow is drawn to indicate that the circled keyword is to be annotated. Then, content at a position pointed by the arrow is formally annotated. The action of circling the keyword and drawing the arrow is a pre-action.

Therefore, in this embodiment of this application, detecting the contact gesture corresponding to the pre-action may be used as a trigger condition for enabling the handwriting or drawing mode, and the handwriting or drawing mode is enabled in a process of performing the pre-action or after the pre-action is finished. The manner of enabling the handwriting or drawing mode by setting the trigger condition conforms to natural thinking of a human being. Enabling of the handwriting or drawing mode is directly triggered by using a handwriting or drawing process of the user, and there is no need to deliberately search the projected screen for a virtual control that is used to enable the handwriting or drawing mode, so that learning costs of the user are reduced. In addition, because the trigger condition is also a handwriting or drawing operation, the user does not sense an obvious difference before and after the handwriting or drawing mode is enabled, and the user is in a handwriting or drawing state from beginning to end. Therefore, in perception of the user, handwriting or drawing for enabling the handwriting or drawing mode is also a part of an annotation of the user, and there is no sense of pause, so that user experience is improved.

The following describes in detail the requirements of the pre-action for enabling the handwriting or drawing mode.

### 1. Time requirement

In a possible implementation, the duration of the swipe gesture may exceed the threshold, where the threshold may be 2 seconds, 2.5 seconds, 3 seconds, 3.5 seconds, or the like. An excessively small threshold may cause false enabling of the handwriting or drawing mode, and an excessively large threshold increases operation costs of enabling the handwriting or drawing mode by the user, which reduces user experience.

Specifically, when the gesture type of the contact gesture is a swipe gesture (or referred to as a handwriting or drawing gesture), the detection module may monitor a handwriting or drawing duration parameter (for example, including duration) of the swipe gesture. The handwriting or drawing duration may be monitored by setting a timer. For example, when the projected screen is displayed, and when detecting that the gesture type of the contact gesture is a swipe gesture, the detection module instructs the timer in the detection module to start counting, and then the handwriting or drawing duration can be recorded.

The reason why that the time is greater than the threshold is used as a requirement of the pre-action for enabling the handwriting or drawing mode is that a pre-action of the user during annotation is a marking action on a handwriting or drawing object, and that the marking action (for example, drawing a circle and drawing an arrow) needs to be finished within a specific period of time. Therefore, that the time is greater than the threshold is used as the requirement of the pre-action for triggering to enable the handwriting or drawing mode, so that some touch gestures generated when the user does not intend to enable the handwriting or drawing mode may be excluded.

For the duration of the swipe gesture, the timer may start counting when the contact gesture is detected, or start counting after it is detected that a contact pressure between the contact gesture and the touchscreen is greater than a specific contact pressure threshold (greater than zero). After the timer starts counting, if the contact pressure of the contact gesture is detected to be zero before duration reaches a threshold, or the contact pressure of the contact gesture is detected to be less than the specific contact pressure threshold (greater than zero), it may be considered that the duration of the swipe gesture does not exceed the threshold.

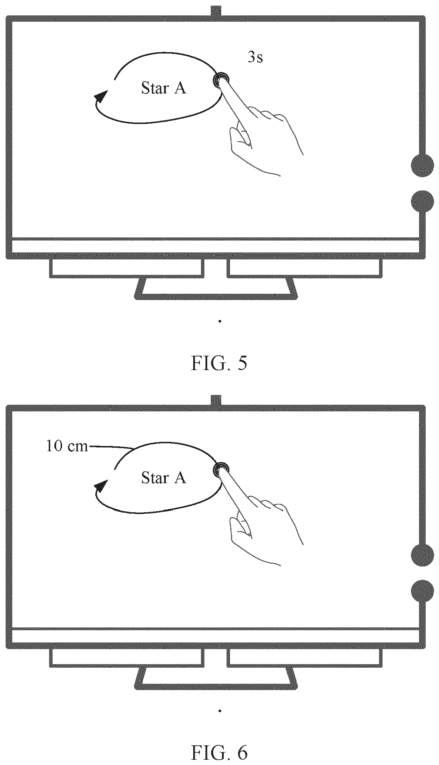

As shown in FIG. 5, FIG. 5 is a schematic diagram in which duration of a contact gesture is 3 seconds.

### 2. Trace length requirement

In a possible implementation, the trace length of the swipe gesture may exceed the threshold, where the threshold may be 10 cm, 15 cm, 20 cm, or the like. It should be understood that the threshold may be related (for example, positively related) to an area of a display of the electronic device.

Specifically, when the gesture type of the contact gesture is a swipe gesture (or referred to as a handwriting or drawing gesture), the detection module may monitor a handwriting or drawing duration parameter (for example, a movement distance of a touch point) of the swipe gesture. The movement distance of the touch point may be counted by the detection module. When tracking the touch point, the detection module may calculate a length of a trace between the current touch point and an initial touch point in real time, namely, the movement distance of the touch point (namely, a trace length of the swipe gesture).

The reason why that the trace length is greater than the threshold is used as a requirement of the pre-action for enabling the handwriting or drawing mode is that a pre-action of the user during annotation is a marking action on a handwriting or drawing object, and that the user needs to perform the marking action to draw a handwritten or drawn pattern (for example, draw a circle and an arrow) used to mark a to-be-annotated object, where the handwritten or drawn pattern has a specific trace length. Therefore, that the trace length is greater than the threshold is used as the requirement of the pre-action for triggering to enable the handwriting or drawing mode, so that some touch gestures generated when the user does not intend to enable the handwriting or drawing mode may be excluded.

As shown in FIG. 6, FIG. 6 is a schematic diagram in which a trace length of a swipe gesture is 10 cm.

### 3. Trace shape requirement

In a possible implementation, a trace shape of the swipe gesture is of a preset trace type. Optionally, the preset trace type may include a circle-type trace or an arrow-type trace. In consideration of a habit of the user, the preset trace type herein may be a shape type of a handwritten or drawn pattern that is usually drawn by the user before annotation is performed, for example, a circle, an arrow, or a trace line whose length exceeds a specified threshold.

It should be understood that the circle-type trace herein may be a strict circle (distances from points on the circle to a circle center are equal or close to equal) or an ellipse-type circle, and a shape of the handwritten or drawn pattern is not necessarily standard. Therefore, these shapes only need to be roughly detected. For example, the circle is not necessarily closed, and may be a roughly circular pattern with a gap, the arrow-type trace may also be a trace whose size is not limited and whose shape is similar to an arrow.

In addition, the preset trace type herein may alternatively be a shape similar to a triangle, a wave, or the like. This is not limited herein.

It should be understood that the trace shape herein may be understood as a distribution feature of touch points included in the contact region, and the trace shape may be determined by detecting a distribution shape of the touch points. (For example, if a group of densely distributed touch points are detected, and the touch points extend along a circle shape, it may be considered that a trace shape of a contact region is a circle-type trace).

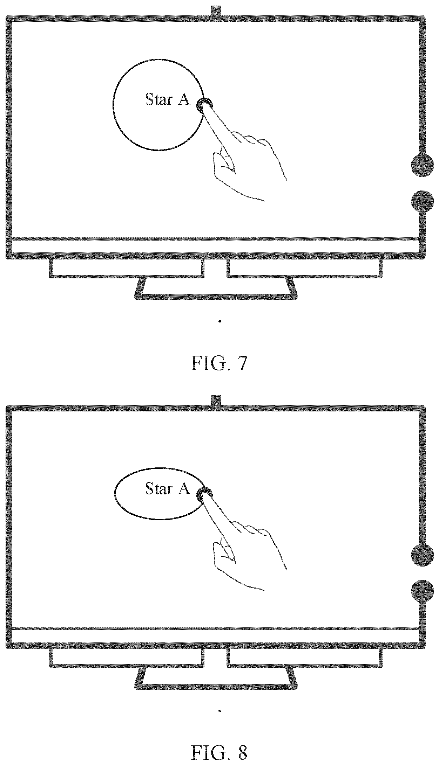

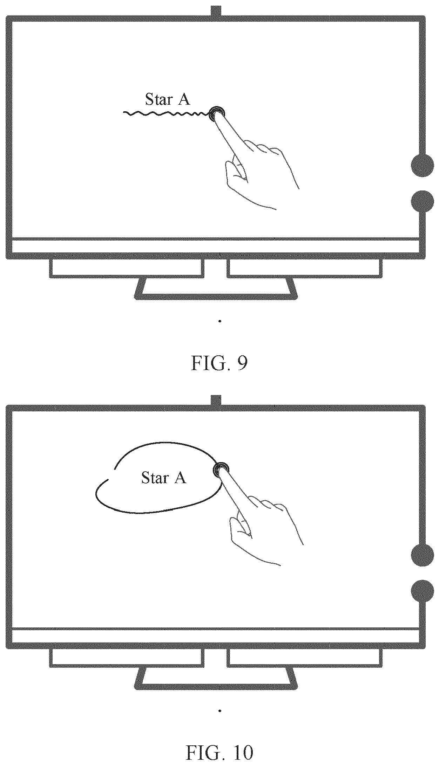

As shown in FIG. 7 to FIG. 11, FIG. 7 to FIG. 11 respectively show schematic diagrams of a plurality of preset trace shapes.

It should be understood that the foregoing requirements of the pre-action for enabling the handwriting or drawing mode may be combined with each other.

For example, when the time requirement is met, the handwriting or drawing mode may be enabled.

For example, when the trace length requirement is met, the handwriting or drawing mode may be enabled.

For example, when the trace shape requirement is met, the handwriting or drawing mode may be enabled.

For example, when the time requirement and the trace length requirement are met, the handwriting or drawing mode may be enabled.

For example, when the time requirement and the trace shape requirement are met, the handwriting or drawing mode may be enabled.

For example, when the trace length requirement and the trace shape requirement are met, the handwriting or drawing mode may be enabled.

For example, when the time requirement, the trace length requirement, and the trace shape are met, the handwriting or drawing mode may be enabled.

For example, duration of the swipe gesture (handwriting or drawing) and the movement distance of the touch point may be monitored. If the handwriting or drawing duration of the swipe gesture and/or the movement distance of the touch point reach/reaches a specified threshold (for example, 3 seconds and 10 cm), the handwriting or drawing mode is enabled.

In this embodiment of this application, the user does not sense an obvious difference before and after the handwriting or drawing mode is enabled, and the user is in a handwriting or drawing state from beginning to end. In perception of the user, handwriting or drawing for enabling the handwriting or drawing mode is also a part of an annotation of the user, and there is no sense of pause.

In a possible implementation, a movement trace of the swipe gesture on the touchscreen may be further displayed based on a contact region of the swipe gesture on the touchscreen. The movement trace may be displayed to provide guidance for the user to enable the handwriting or drawing mode, which facilitates understanding of the user.

In a possible implementation, the movement trace includes a start position, a first trace segment, and a second trace segment. The first trace segment and the second trace segment are different trace segments on the movement trace, a distance between the first trace segment and the start position is less than a distance between the second trace segment and the start position, and display transparency of the first trace segment is lower than display transparency of the second trace segment.

Handwriting or drawing duration and a movement distance of a touch point may be associated with opacity of a handwriting or drawing trace, and may also be associated with switching of an annotation mode. For example, it may be set that when at least one of the following conditions is met: handwriting or drawing is continuously performed for 3 seconds and the movement distance of the touch point reaches 10 cm, the opacity of the handwriting or drawing trace increases from 0 to 100%, and the handwriting or drawing mode is enabled at the same time.

In other words, in a process of enabling the handwriting or drawing mode, presentation of the handwriting or drawing trace is a process in which the opacity is continuously enhanced. In the beginning, although an input point is tracked, the handwriting or drawing trace is not displayed. In other words, the handwriting or drawing trace is transparent (or does not exist) in the beginning. Subsequently, the opacity is continuously enhanced, and the handwriting or drawing trace is changed from being transparent to opaque, and is gradually obvious. When the projected screen is displayed, a displayed screen may include two layers: a screen projection layer and a trace tracking layer. The screen projection layer displays the projected screen, and the trace tracking layer is used to track the touch point and display the movement trace of the touch point.

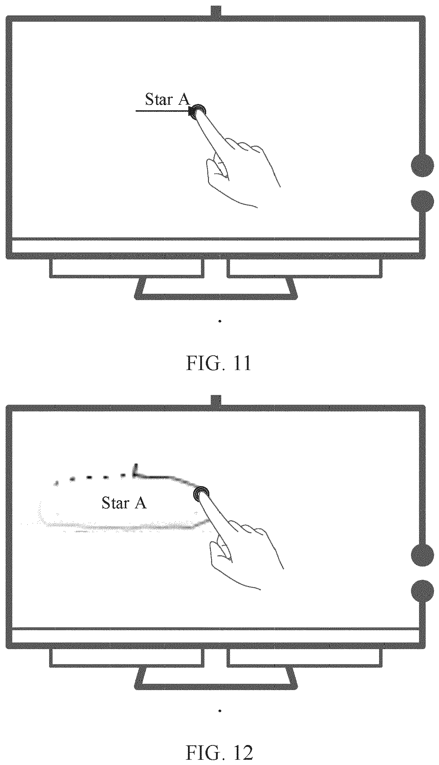

For example, as shown in FIG. 12, when the trace tracking layer displays the movement trace of the touch point, each time a touch point is detected, a trace point is displayed at a position of the touch point, and a set of trace points is the movement trace of the touch point. Opacity of the displayed touch point trace gradually increases with the handwriting or drawing duration/the movement distance of the touch point. For example, the handwriting or drawing duration is associated with the opacity. A function T(t) associated with time is defined, where te(0, 11), t1 is a specified threshold of the handwriting or drawing duration, and T(t) may be used to control opacity of trace points displayed at the trace tracking layer. As t increases, the opacity gradually increases. The trace of the touch point is displayed based on T(t), so that the movement trace of the touch point that changes from being transparent to opaque can be obtained.

The movement trace is changed from being transparent to opaque, and a natural and agile feedback manner is used to provide guidance for the user to enable the handwriting or drawing mode. This promotes understanding of the user.

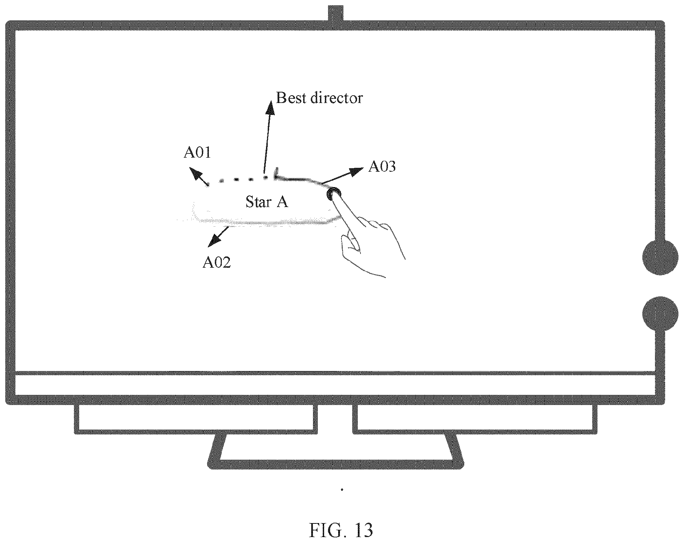

As shown in FIG. 13, FIG. 13 shows an instance of a process of enabling a handwriting or drawing mode.

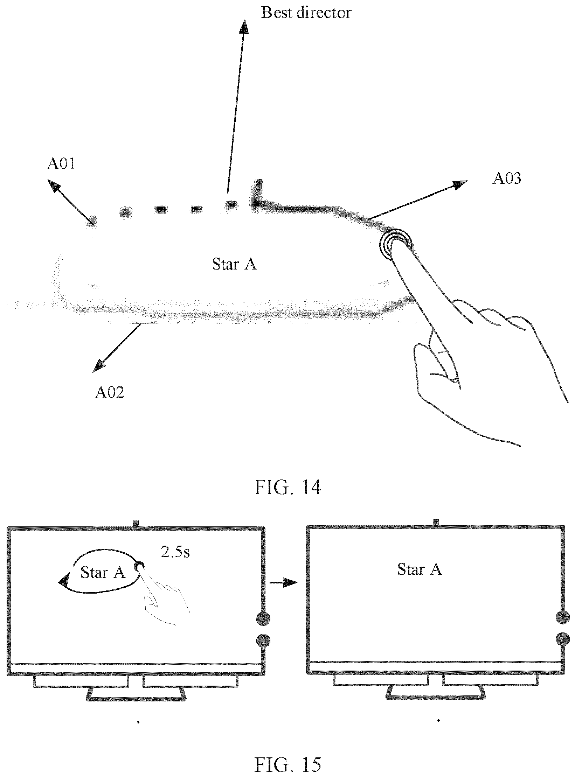

As shown in FIG. 13, a user performs a pre-action before annotation is performed, and the pre-action is to circle to-be-annotated content. A represents a movement trace of a touch point of touch input of the pre-action, and the trace A is displayed at the trace tracking layer. FIG. 14 shows an enlarged view of a part B, and a movement trace A is specifically amplified and shown. The movement trace A includes A01 to A03, and a movement direction of the touch points is A01-A02-A03. When the input is just performed, t is close to zero. Based on the function T(t), opacity is close to zero. Therefore, A01 is completely transparent and cannot be visually observed (A01 in FIG. 14 is represented by a dashed line). The opacity increases and can be perceived by naked eyes from A02. Further, the opacity gradually increases with the increase of the touch time, and the opacity increases to 100% at an end point of A03 (it is assumed that an entire circle is just drawn when t = 11). The handwriting or drawing mode is enabled at the end point of A03.

It may be understood that the pre-action is not mandatory. If the user directly performs annotation without the pre-action, a handwriting or drawing duration parameter (for example, duration and a trace length) may also be detected. However, because the opacity is zero in the beginning, a word that is initially written is not displayed or is not completely displayed, and handwriting needs to be performed continuously to ensure that handwriting duration/a movement distance is sufficient. If the handwriting or drawing duration does not reach a specified threshold (for example, 3 seconds), or the movement trace of the touch point does not reach a specified threshold (for example, 10 cm), the touch point is detached from the device screen. Therefore, the trace displayed at the trace tracking layer is cleared.

As shown in FIG. 15, if the touch input is interrupted when the handwriting or drawing duration of the user is less than the threshold, the trace displayed at the trace tracking layer disappears, and the user needs to start handwriting or drawing again, and the timer re-counts.

In this embodiment of this application, the handwriting or drawing mode may be enabled based on a fact that the contact gesture is a swipe gesture and that the swipe gesture meets a preset condition. The enabling the handwriting or drawing mode herein may be understood as setting a handwriting or drawing layer at an upper layer of the displayed projected screen. The detection module may detect the handwriting or drawing gesture, and display, at the handwriting or drawing layer, handwritten or drawn content corresponding to the handwriting or drawing gesture. In terms of the display effect, content on the projected screen can be overwritten by the handwritten or drawn content. In addition, a difference between display of the handwritten or drawn content and display of the movement trace lies in that, the movement trace automatically disappears after a preset period of time, and the handwritten or drawn content does not automatically disappear when the user does not make a deletion instruction or a saving instruction.

303: Detect a handwriting or drawing gesture on the touchscreen, and display, in the target screen, handwritten or drawn content corresponding to the handwriting or drawing gesture.

In a possible implementation, to prompt the user that the handwriting or drawing mode is enabled, after the handwriting or drawing mode is enabled, a target prompt may be presented in response to the enabling of the handwriting or drawing mode, where the target prompt indicates that the handwriting or drawing mode is enabled, and the target prompt includes at least one of a vibration prompt, a text prompt, a sound prompt, and a picture prompt.

A to-be-annotated object on which the user performs annotation in the projected screen is usually projected content (for example, a character or a pattern) fixed in the projected screen. In a possible implementation, in response to the enabling of the handwriting or drawing mode, the projected content displayed in the projected screen may remain unchanged. The projected screen is displayed based on a projection signal (indicating projected content) from another terminal. After content (projected content) of the another terminal changes, the projected content indicated by the projection information also changes correspondingly. However, after the handwriting or drawing mode is enabled, to make it convenient for the user to annotate with comments on the projected content fixed in the projected screen, the projected content displayed in the projected screen may remain unchanged. The unchanged projected content may be projected content that is displayed in the projected screen at a moment at which it is detected that the swipe gesture meets the preset condition (or with a very short time difference, for example, a time difference close to zero, such as 0.1s, 0.15s, or 0.2s).

After the handwriting or drawing mode is enabled, display of the projected content is fixed. In this case, if the terminal whose screen is projected is operated, the projected picture of the touchscreen does not change, and the touchscreen still displays the fixed projected picture. After the picture is fixed, the display may load a wordpad in a display area, so that the user may write and draw (for example, annotate with comments) on the wordpad.

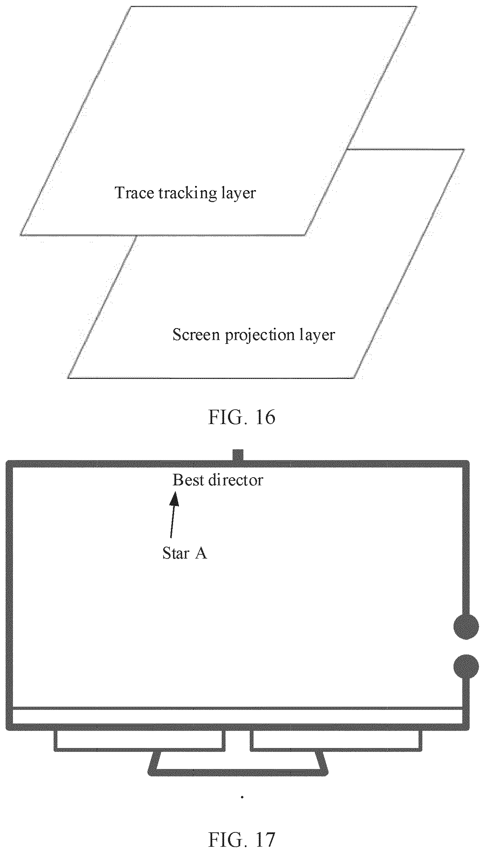

After the handwriting or drawing mode is enabled, the trace tracking layer (a layer used to display a movement trace) disappears, and is replaced by loading of the wordpad (that is, the handwriting or drawing layer). Therefore, when the handwriting or drawing mode is enabled, the wordpad replaces the trace tracking layer. After the handwriting or drawing mode is enabled, a display layer of the device screen is shown in FIG. 16. The wordpad is used to display handwriting or drawing of the user, and the screen projection layer still displays a projected screen pattern. The movement trace displayed at the trace tracking layer disappears after the annotation mode is enabled, and the movement trace displayed at the trace tracking layer also disappears. Therefore, the content displayed by the wordpad does not include the movement trace of the touch point displayed at the trace tracking layer before the annotation mode is enabled, as shown in FIG. 17.

For example, the user needs to annotate with comments on "Star A". A complete action for the user to perform annotation is as follows: Circle "Star A", draw an arrow, and then annotate with comments "Famous director, gold film producer, and best director of a country". The circling the "Star A" and drawing the arrow are a pre-action. In a process of drawing a circle (circling the "Star A"), at least a part of a trace of the circle is displayed at the trace tracking layer. It is assumed that it takes 3 seconds to finish drawing the entire circle, where the specified threshold is just reached. Therefore, the handwriting or drawing mode is enabled at the moment when the circle drawing is finished. When the circle drawing is finished, the trace tracking layer disappears, and the wordpad is loaded. Next, when the user continues to draw the arrow, the arrow is displayed on the wordpad. When the wordpad is loaded, the trace tracking layer disappears, and the circle displayed at the trace tracking layer also disappears. Therefore, comment content that is actually viewed includes the arrow and the comments, and does not include the circle.

It should be understood that, if it takes more than 3 seconds to draw the circle, the handwriting or drawing mode is enabled before the circle is drawn completely. A part of the circle is displayed on the wordpad, and finally the part of the circle is displayed. Therefore, whether the pre-action is finished may not be directly related to enabling of the annotation mode, and the pre-action is used as a process of converting the handwriting or drawing from being transparent to opaque at the trace tracking layer. The pre-action may be a part of the annotation (such as the arrow, and the part of the circle displayed on the wordpad). In other words, the handwriting or drawing mode may be enabled before or after the pre-action is finished. The pre-action is just based on a possible annotation habit of the user. The pre-action is combined with enabling of the annotation mode, to prevent a situation of repeated writing because the comments written before the wordpad is loaded cannot be displayed on the wordpad. In a process of drawing the circle, opacity of the circle gradually increases, and this process may be used as a guidance for the user, so that the user can recognize that handwriting of the user is fed back, and that annotation may be performed if the user continues to write. It can be learned from the foregoing process that a process of enabling the handwriting or drawing mode is natural. In a process in which the user considers that the user is "annotating" (but actually, there is no comment annotated in the initial three seconds), the handwriting or drawing mode is smoothly and naturally enabled.

The following describes how to keep the projected content displayed in the projected screen unchanged.

In a possible implementation, a screenshot may be taken of the projected content displayed in the projected screen to obtain a first image, and the first image is kept displayed in the projected screen. Therefore, during handwriting or drawing, the handwritten or drawn content corresponding to the handwriting or drawing gesture may be displayed at an upper layer of the first image.

In a possible implementation, pixel information of the projected content displayed in the projected screen at a target moment may be obtained, and the projected content corresponding to the pixel information is kept displayed in the projected screen. Further, during handwriting or drawing, the handwritten or drawn content corresponding to the handwriting or drawing gesture may be displayed at the upper layer of the projected content corresponding to the pixel information.

In a possible implementation, a target instruction may be received, where the target instruction instructs to save the handwritten or drawn content; and the first image and the handwritten or drawn content displayed at the upper layer are saved in response to the target instruction.

In a possible implementation, a target instruction may be received, where the target instruction instructs to save the handwritten or drawn content; and in response to the target instruction, a screenshot is taken of the projected screen, and a second image obtained by taking the screenshot is saved.

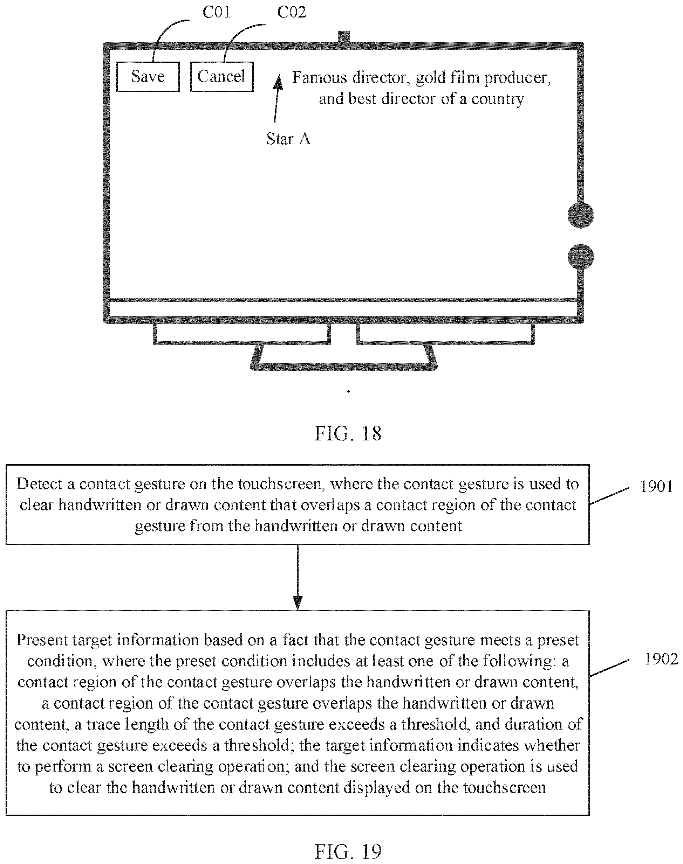

After finishing handwriting or drawing (for example, performing annotation), the user may save the handwritten or drawn content. After the handwriting or drawing mode is enabled, a saving control and a canceling control may be displayed. As shown in FIG. 18, FIG. 18 shows a screen including handwritten or drawn content, and also shows a saving control C01 and a canceling control C02. After finishing annotation, the user may tap "Save" C01. The processor takes a screenshot of the current projected picture and the handwritten or drawn content, and saves the screenshot in a storage module of the electronic device. The saved content may be invoked later. If the user taps "Cancel" C02, the current projected picture and the handwritten or drawn content are not saved. Two solutions may be included herein: One is to take a screenshot of the projected picture when the projected picture is fixed, and subsequent handwriting or drawing is performed on the screenshot, and the handwritten or drawn content and the screenshot are saved together. The other is not to take a screenshot when the projected picture is fixed, only pixels are fixed and are no longer refreshed; and a screenshot is taken only when "Save" is tapped, and the handwritten or drawn content is saved in the storage module of the electronic device together with the screenshot. The difference between the two solutions is that the first solution is to first take a screenshot and then perform handwriting or drawing, where the saved handwritten or drawn content can be modified and deleted; and the second solution is to first perform handwriting or drawing and then take a screenshot, where the handwritten or drawn content is a part of the screenshot and cannot be modified or deleted, and handwriting or drawing can be performed only on the invoked screenshot.

This application provides a method for displaying handwritten or drawn content, applied to an electronic device, where the electronic device includes a touchscreen, the touchscreen displays a projected screen, and the method includes: detecting a contact gesture on the touchscreen; enabling a handwriting or drawing mode based on a fact that the contact gesture is a swipe gesture and the swipe gesture meets a preset condition, where the preset condition includes at least one of the following: duration of the swipe gesture exceeds a threshold, a trace length of the swipe gesture exceeds a threshold, and a trace shape of the swipe gesture is of a preset trace type; and in response to the enabling of the handwriting or drawing mode, detecting a handwriting or drawing gesture on the touchscreen, and displaying, in the projected screen, handwritten or drawn content corresponding to the handwriting or drawing gesture. In the foregoing manner, detecting the contact gesture corresponding to the pre-action is used as a trigger condition for enabling the handwriting or drawing mode, and the handwriting or drawing mode is enabled in a process of performing the pre-action or after the pre-action is finished. The manner of enabling the handwriting or drawing mode by setting the trigger condition conforms to natural thinking of a human being. Enabling of the handwriting or drawing mode is directly triggered by using a handwriting or drawing process of the user, and there is no need to deliberately search the projected screen for a virtual control that is used to enable the handwriting or drawing mode, so that learning costs of the user are reduced. In addition, because the trigger condition is also a handwriting or drawing operation, the user does not sense an obvious difference before and after the handwriting or drawing mode is enabled, and the user is in a handwriting or drawing state from beginning to end. Therefore, in perception of the user, handwriting or drawing for enabling the handwriting or drawing mode is also a part of an annotation of the user, and there is no sense of pause, so that user experience is improved.

As shown in FIG. 19, FIG. 19 is a schematic flowchart of a method for triggering a screen clearing operation according to an embodiment of this application. The method may be applied to an electronic device. The electronic device includes a touchscreen, and the touchscreen displays handwritten or drawn content. The method includes the following steps.

1901: Detect a contact gesture on the touchscreen, where the contact gesture is used to clear handwritten or drawn content that overlaps a contact region of the contact gesture from the handwritten or drawn content.

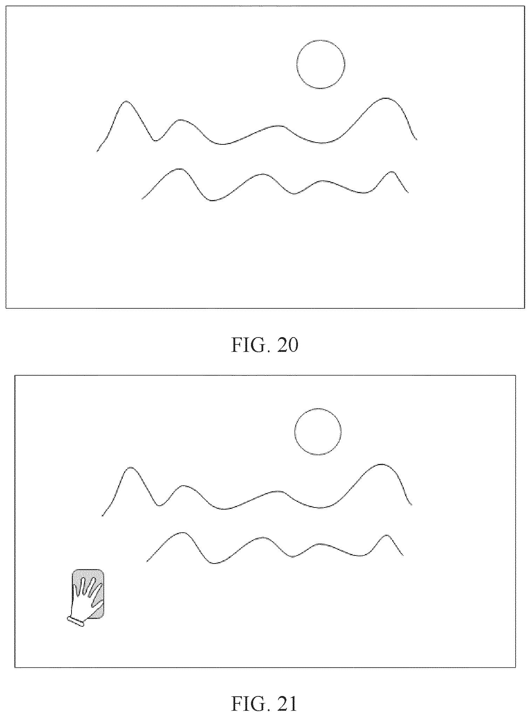

The electronic device may be applied to a scenario in which a whiteboard screen is displayed and a scenario in which a projected screen is displayed. The whiteboard screen (for example, as shown in FIG. 20) may support free handwriting or drawing of a user, and the projected screen may display a projected picture of an external device. In a whiteboard scenario, when a user writes too much content in the whiteboard screen, some or all content needs to be erased to release space for handwriting or drawing. If all content needs to be cleared, the screen needs to be cleared. Therefore, there is a requirement for screen clearing.

There are two main technical paths for performing screen clearing in the conventional technology. In the first manner, a virtual eraser is evoked by using a swipe gesture, and all content on a screen is erased directly by using the virtual eraser. This manner is simple and straightforward, and is acceptable to a user. However, a large area of a palm moves for a long distance, which consumes a lot of physical energy and burns a hand. In the second manner, the screen is cleared by clicking a screen clearing button. However, this manner cannot be supported in the physical world, and it is difficult for the user to generate a screen clearing concept (especially when the whiteboard is a public device and other experience is similar to that in the physical world). In addition, the screen clearing manner is too obscure, and the user searches a series of virtual buttons for a virtual button related to erasing, resulting in high perception costs.

In this embodiment of this application, the user may perform, on the touchscreen, an operation of a contact gesture that meets a specific rule, to trigger display of a screen clearing option (for example, target information described below in this embodiment).

In this embodiment of this application, a detection module may detect the contact gesture of the user on the touchscreen, and when the contact gesture meets a specific condition, determine that the contact gesture is used to clear handwritten or drawn content that overlaps the contact region of the contact gesture from the handwritten or drawn content.

For example, in a possible implementation, if the palm of the user is in contact with the device screen, the detection module may detect dense touch points in a palm contact area, and an area of the dense touch points is greater than a preset value. In this case, the detection module may consider that erase input is received (that is, determine that the contact gesture is used to clear the handwritten or drawn content that overlaps the contact region of the contact gesture from the handwritten or drawn content). Optionally, the detection module may further generate and send a set of instructions to a processor, and the processor displays a virtual eraser in a handwriting or drawing screen according to the set of instructions.

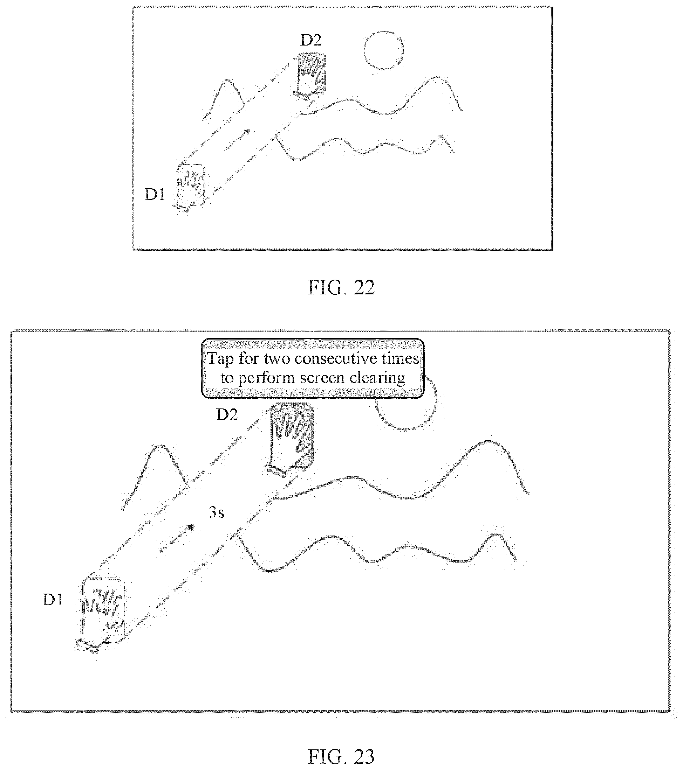

For example, as shown in FIG. 21, a palm of a user is in contact with a device screen, the detection module may detect densely distributed "hand-shaped" touch points, and the detection module recognizes this gesture as an erasing gesture. When the detection module detects the erasing gesture, a generated instruction enables the processor to display a virtual eraser on the device screen, where the eraser is used to perform an erasing operation. A handwritten or drawn pattern of the user in a region through which the eraser swipes is cleared (for example, as shown in FIG. 22). The eraser includes all touch points. For example, a center of the eraser is aligned with a center of all the touch points. In an actual application, the eraser may alternatively not be displayed, and a set of touch points of the palm is directly considered as an eraser (in this case, the set of touch points may be considered as an invisible eraser). Alternatively, another gesture may be used as an erasing gesture, for example, a side of a hand after a fist is clenched may be used.

After the eraser is evoked by using touch gesture input, movement of the gesture drives movement of the eraser. Specifically, the processor aligns a display position of the eraser with a central point of a plurality of touch points. When the central point moves, the eraser moves with the movement of the central point, and the handwritten or drawn pattern of the user is cleared in a region through which the eraser passes. Specifically, as shown in FIG. 22, a palm moves from one position to another position, and keeps contact with the device screen in a movement process. The movement of the palm is movement of the touch points. The eraser is aligned with the central point of the touch points, and the eraser also moves from a position D1 to a position D2. If a moving path (shown by a dashed line in FIG. 22) of the eraser passes through a handwritten or drawn pattern, the handwritten or drawn pattern on the moving path is erased.

For a requirement of a trigger action for triggering to display a screen clearing option, when a user needs to clear a screen, due to human habituality, a natural selection is to wipe all handwriting little by little by using a hand, which is similar to a blackboard wipe.

Therefore, in this embodiment of this application, detecting the contact gesture corresponding to the foregoing erasing process may be used as a trigger condition for displaying the screen clearing option, and the screen clearing option is displayed in a process of performing a pre-action or after the pre-action is finished. Setting of the trigger condition conforms to natural thinking of a human being. Display of the screen clearing option is directly triggered by using the erasing process of the user, and there is no need to deliberately search the projected screen for the screen clearing option, which reduces learning costs of the user. There is no sense of pause in operation of the user, and this improves user experience.

1902: Present target information based on a fact that the contact gesture meets a preset condition, where the preset condition includes at least one of the following: the contact region of the contact gesture overlaps the handwritten or drawn content, the contact region of the contact gesture overlaps the handwritten or drawn content, a trace length of the contact gesture exceeds a threshold, and duration of the contact gesture exceeds a threshold, the target information indicates whether to perform the screen clearing operation, and the screen clearing operation is used to clear the handwritten or drawn content displayed on the touchscreen.

When it is determined that the contact gesture is used to clear the handwritten or drawn content that overlaps the contact region of the contact gesture from the handwritten or drawn content, the detection module may monitor a related parameter of the contact gesture, and the target information is presented when the related parameter meets a preset condition.

The target information may be a selection control used to enable a screen clearing function.

The following describes in detail requirements of the pre-action for presenting the target information.

### 1. Time requirement

In a possible implementation, the duration of the contact gesture may exceed the threshold, where the threshold may be 2 seconds, 2.5 seconds, 3 seconds, 3.5 seconds, or the like. An excessively small threshold may cause false presentation of the target information, and an excessively large threshold may increase operation costs of presenting the target information, which reduces user experience.

Specifically, when a gesture type of the contact gesture is an erasing gesture (that is, it is determined that the contact gesture is used to clear the handwritten or drawn content that overlaps the contact region of the contact gesture from the handwritten or drawn content), the detection module may monitor a contact duration parameter (for example, including duration) of the erasing gesture. Contact duration of the erasing gesture may be monitored by setting a timer. For example, when the handwriting or drawing screen is displayed, and when detecting the erasing gesture, the detection module instructs the timer in the detection module to start counting, and then the contact duration of the erasing gesture can be recorded.

As shown in FIG. 23, the reason why that the time is greater than the threshold is used as a requirement of the pre-action for presenting the target information is that during screen clearing, it takes the user a specific period of time to clear all the handwritten or drawn content. Therefore, that the time is greater than the threshold is used as the requirement for triggering presentation of the target information, so that an erasing gesture that is generated when the user has only an erasing intention (an intention of clearing some handwritten or drawn content) but does not have a screen clearing intention may be excluded.

For the duration of the contact gesture, the timer may start counting when the erasing gesture is detected, or start counting after it is detected that a contact pressure between the contact gesture and the touchscreen is greater than a specific contact pressure threshold (greater than zero). After the timer starts counting, if the contact pressure of the erasing gesture is detected to be zero before duration reaches a threshold, or the contact pressure of the erasing gesture is detected to be less than the specific contact pressure threshold (greater than zero), it may be considered that the duration of the contact gesture does not exceed the threshold.

When a duration parameter of erase input is monitored, the erase input may be effective erasing or ineffective erasing. Effective erasing means that an eraser moves, and a handwritten or drawn pattern is actually erased. Ineffective erasing means that the eraser moves, and the handwritten or drawn pattern is not actually erased. In case of ineffective erasing, when a palm/eraser does not move, there is erase input as long as contact between the palm and the device screen is maintained and the eraser exists from beginning to end. Therefore, collecting statistics on duration of the erase input is collecting statistics on existence time of the eraser, and is also collecting statistics on duration of contact between the palm and the device screen. However, in this case, a movement distance of touch points is zero.

Certainly, movement of the eraser may alternatively be used as a necessary condition. A timer counts only when the eraser exists and moves. The timer re-counts once the eraser stops moving.

### 2. Trace length requirement

In a possible implementation, the trace length of the contact gesture (a trace length of erasing) may exceed the threshold, where the threshold may be 10 cm, 15 cm, 20 cm, or the like. It should be understood that the threshold may be related (for example, positively related) to an area of a display of the electronic device.

Specifically, when the gesture type of the contact gesture is an erasing gesture, the detection module may monitor a contact duration parameter (for example, including a movement distance of a contact region of the contact gesture) of the erasing gesture. The movement distance of the touch point may be counted by the detection module. When tracking the touch point, the detection module may calculate a length of a trace between the current touch point and an initial touch point in real time, namely, the movement distance of the touch point (namely, a trace length of the contact gesture).

The reason why that the trace length is greater than the threshold is used as a requirement of the pre-action for presenting the target information is that during screen clearing, it takes a user a specific erasing distance to clear all the handwritten or drawn content. Therefore, that the trace length of the contact gesture is greater than the threshold is used as the requirement for triggering presentation of the target information, so that an erasing gesture that is generated when the user has only an erasing intention (an intention of clearing some handwritten or drawn content) but does not have a screen clearing intention may be excluded.

### 3. Contact area of the contact gesture

In a possible implementation, the contact region of the contact gesture needs to overlap the handwritten or drawn content.

The reason why that the contact region of the contact gesture needs to overlap the handwritten or drawn content is used as a requirement of the pre-action for presenting the target information is that during screen clearing, an erasing path needs to cover the handwritten or drawn content because the user needs to clear all the handwritten or drawn content. Therefore, that the contact region of the contact gesture needs to overlap the handwritten or drawn content is used as the requirement for triggering presentation of the target information, so that an erasing gesture (for example, a touch by mistake) that is generated when the user does not have a screen clearing intention may be excluded.

It should be understood that the foregoing requirements of the pre-action for presenting the target information may be combined with each other.

For example, when the time requirement is met, the target information may be presented.

For example, when the trace length requirement is met, the target information may be presented.

For example, when the contact region of the contact gesture is met, the target information may be presented.

For example, when the time requirement and the trace length requirement are met, the target information may be presented.

For example, when the time requirement and the contact region of the contact gesture are met, the target information may be presented.

For example, when the trace length requirement and the contact region of the contact gesture are met, the target information may be presented.

For example, when the time requirement, the trace length requirement, and the trace shape are met, the target information may be presented.

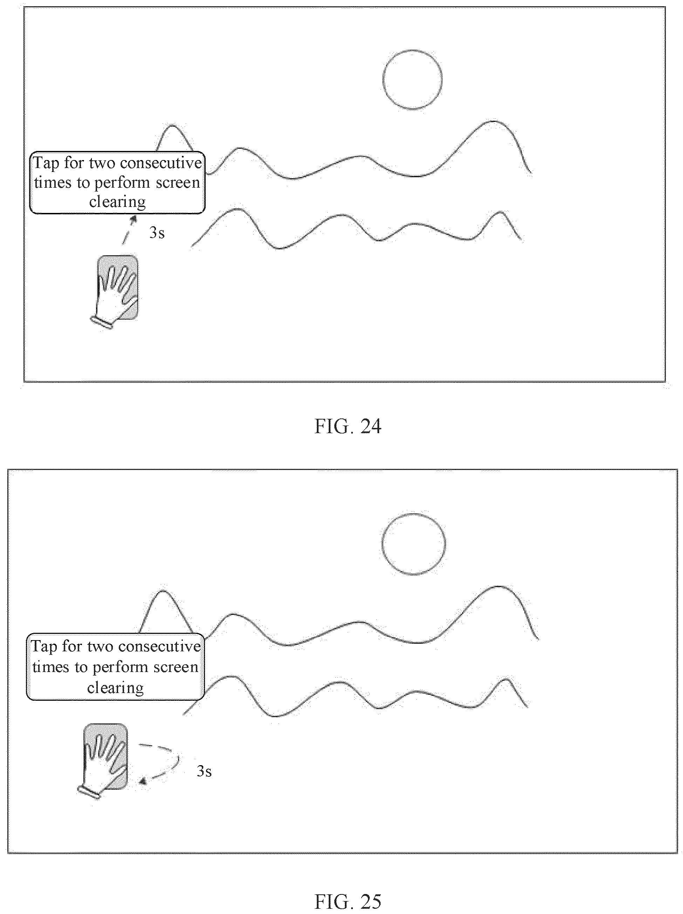

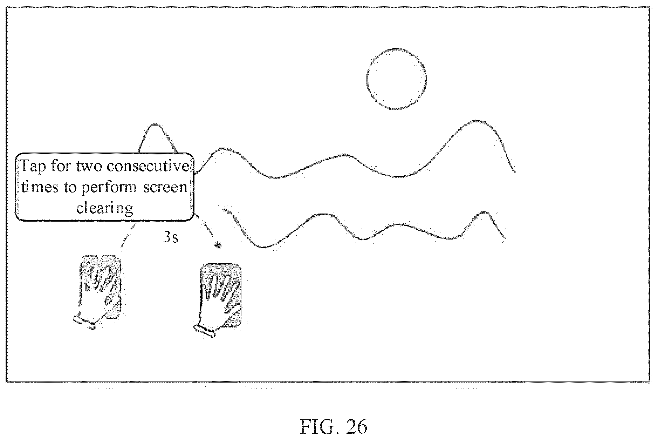

For example, when the duration parameter of the erase input is monitored, it may be further considered that a screen clearing prompt is triggered only when an effective erasing event occurs in an eraser moving process. As shown in FIG. 24, after a palm comes into contact with a device screen to evoke an eraser, as long as the eraser exists, no matter whether the eraser moves or not, timing of a timer is effective. After duration reaches a specified threshold, a screen clearing prompt is triggered. In FIG. 25, after an eraser is evoked, the eraser frequently moves in a local range, and timing of a timer is effective. After movement duration reaches a specified threshold, a screen clearing prompt is triggered. In FIG. 26, a screen clearing prompt is triggered only when an eraser keeps moving and effective erasing occurs during the movement. Otherwise, the screen clearing prompt is not triggered even if counted duration exceeds a specified threshold. For example, if the eraser is driven by a gesture to keep moving, but a moving path of the gesture does not pass through a handwritten or drawn pattern, the eraser does not perform effective erasing, and keeps moving in a blank area, the screen clearing prompt is not triggered even if the counted duration of the timer reaches the specified threshold. If the eraser performs effective erasing after the counted duration reaches the specified threshold, the screen clearing prompt is triggered. In this case, the counted duration exceeds the specified threshold. If effective erasing occurs within the counted duration, the screen clearing prompt is also triggered after the specified threshold of the counted duration is reached. A position at which the target information is displayed may be adapted to a position of the eraser. During erasing, the user focuses on a region near the eraser, and can notice the prompt information in a timely manner.

In this embodiment of this application, the target information is presented based on a fact that the contact gesture meets a preset condition, where the target information indicates whether to perform a screen clearing operation, and the screen clearing operation is used to clear the handwritten or drawn content displayed on the touchscreen.

In a possible implementation, a target gesture of the user on the touchscreen may be detected, where the target gesture instructs to perform the screen clearing operation; and the handwritten or drawn content displayed on the touchscreen is cleared in response to the target gesture.

For example, when erasing duration and/or a movement distance of a touch point reach/reaches a specified threshold (for example, 2 seconds and 10 cm respectively), a processor outputs a screen clearing prompt, displays the screen clearing prompt on a display, and prompts the user to perform the screen clearing operation in the handwriting or drawing screen. The user may determine, depending on a requirement of the user, whether to respond to the screen clearing prompt, and perform a corresponding operation to clear the screen. For details, refer to FIG. 24.

In a possible implementation, if the target information indicates an enabling condition for performing the screen clearing operation, a target gesture that is of the user on the touchscreen and that meets the enabling condition may be detected.

For example, the enabling condition may include performing a preset quantity of tap gestures on the touchscreen.

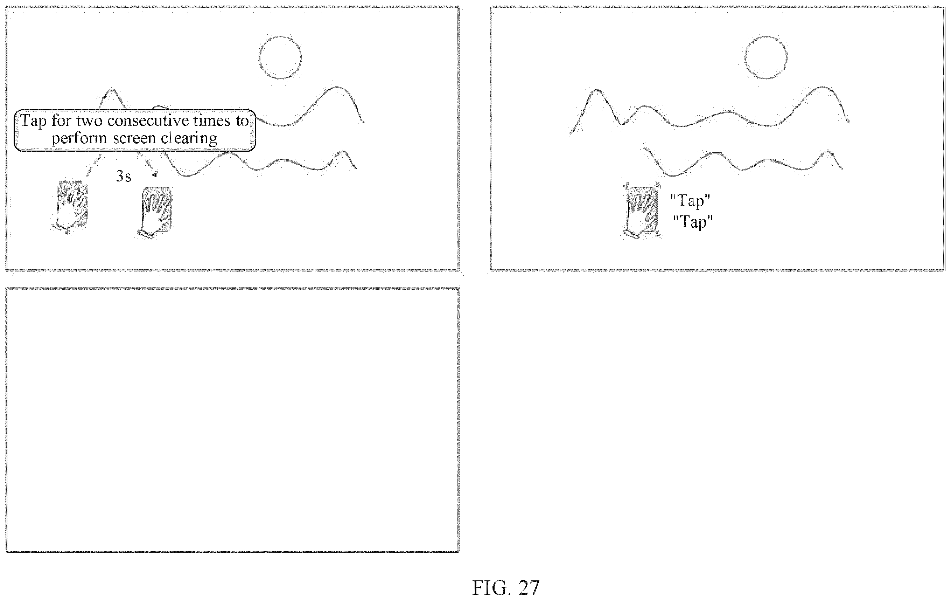

For example, when counted duration of a timer and/or a movement distance of a touch point reach/reaches a specified threshold, a display displays a prompt "Tap for two consecutive times to perform screen clearing". For example, in FIG. 27, if it takes a palm 3 seconds to move from a position D1 to a position D2, where the specified threshold is just reached, a processor displays a prompt "Tap for two consecutive times to perform screen clearing" on the device screen, to prompt the user to implement screen clearing by using two consecutive taps. If the user wants to clear the screen, the user performs corresponding input according to the prompt, so as to complete the screen clearing. If the user does not want to clear the screen, but only needs to partially erase a part of a handwritten or drawn pattern, the user may ignore the prompt information. The prompt information is hidden after being displayed for a specific period of time (for example, 10 seconds).

In this embodiment, information is used to prompt that further input is required, and normal erasing is distinguished from screen clearing. If no further input is performed, normal erasing is not affected.

An embodiment of this application provides a method for triggering a screen clearing operation, which may be applied to an electronic device, where the electronic device includes a touchscreen, and the touchscreen displays handwritten or drawn content. The method includes: detecting a contact gesture on the touchscreen, where the contact gesture is used to clear handwritten or drawn content that overlaps a contact region of the contact gesture from the handwritten or drawn content; and presenting target information based on a fact that the contact gesture meets a preset condition, where the preset condition includes at least one of the following: the contact region of the contact gesture overlaps the handwritten or drawn content, the contact region of the contact gesture overlaps the handwritten or drawn content, a trace length of the contact gesture exceeds a threshold, and duration of the contact gesture exceeds a threshold, the target information indicates whether to perform the screen clearing operation, and the screen clearing operation is used to clear the handwritten or drawn content displayed on the touchscreen. Detecting the contact gesture corresponding to the foregoing erasing process may be used as a trigger condition for displaying the screen clearing option, and the screen clearing option is displayed in a process of performing a pre-action or after the pre-action is finished. Setting of the trigger condition conforms to natural thinking of a human being. Display of the screen clearing option is directly triggered by using the erasing process of the user, and there is no need to deliberately search the projected screen for the screen clearing option, which reduces learning costs of the user. There is no sense of pause in operation of the user, and this improves user experience.

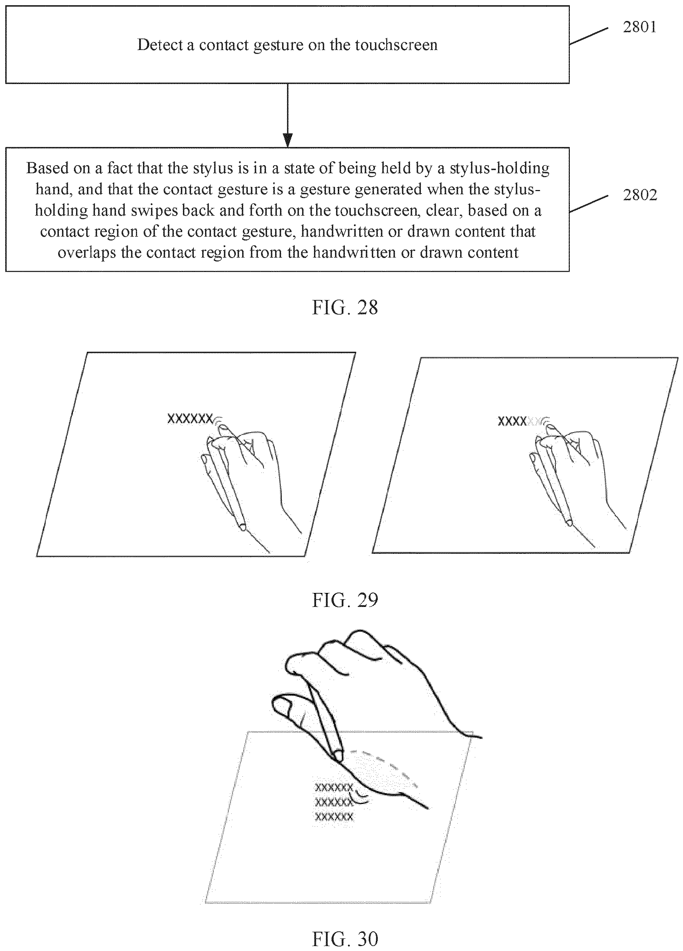

As shown in FIG. 28, FIG. 28 is a schematic flowchart of a method for erasing handwritten or drawn content according to an embodiment of this application. The method may be applied to an electronic device, the electronic device is connected to a stylus, the electronic device includes a touchscreen, and the touchscreen displays handwritten or drawn content. The method includes the following steps.

2801: Detect a contact gesture on the touchscreen.

For description of step 2801, refer to the description of step 301 in the foregoing embodiment. Details are not described herein again.

2802: Based on a fact that the stylus is in a state of being held by a stylus-holding hand, and that the contact gesture is a gesture generated when the stylus-holding hand swipes back and forth on the touchscreen, clear, based on a contact region of the contact gesture, handwritten or drawn content that overlaps the contact region from the handwritten or drawn content.

It may be determined, in the following manner, that the stylus (or referred to as a stylus) is in a state of being held by the stylus-holding hand.

In a possible implementation, a first motion characteristic of the stylus and a second motion characteristic that is generated when the contact gesture swipes back and forth on the touchscreen may be obtained, where the first motion characteristic and the second motion characteristic are used to indicate a motion speed and/or a motion direction; and based on a fact that the first motion characteristic is consistent with the second motion characteristic, it is determined that the stylus is in a state of being held by the stylus-holding hand.

Specifically, when the back-and-forth swipe gesture is detected, and motion information of the stylus is consistent with a motion rule of the back-and-forth swipe gesture, it indicates that the stylus-holding hand is swiping back and forth, and it is considered that a user has an erasing intention. In this case, an eraser is evoked at a position of a set of touch points (that is, a set of touch points detected by a touch chip module) between the hand and the device screen. When a moving path of the eraser passes through a region with a handwritten or drawn pattern, a handwritten or drawn pattern on the path is erased.

In a possible implementation, when the stylus-holding hand swipes back and forth, the stylus moves together with the hand. Therefore, a sensor on the stylus may be used to sense whether the stylus is being held and whether the stylus moves together with the hand. In this way, it may be determined, by using the motion information of the stylus, whether the back-and-forth swipe gesture is operated by the stylus-holding hand. A plurality of types of sensors may be configured on the stylus. One type of sensor is used to sense whether the stylus is being held, and another type of sensor is used to sense a motion of the stylus. Further, the sensor may be used to measure a swiping speed and a swiping direction of the stylus, so as to calculate an action frequency of the back-and-forth motion of the stylus. If the action frequency is greater than a preset value (for example, 3 Hz), it is considered that the stylus is swiping back and forth, and a hand holding the stylus is the stylus-holding hand.

In this embodiment of this application, only the stylus-holding hand of the stylus can perform an erasing operation, and the other hand cannot perform the erasing operation. In other words, when the other hand swipes on the device screen, the erasing operation is not performed even if other conditions are met.

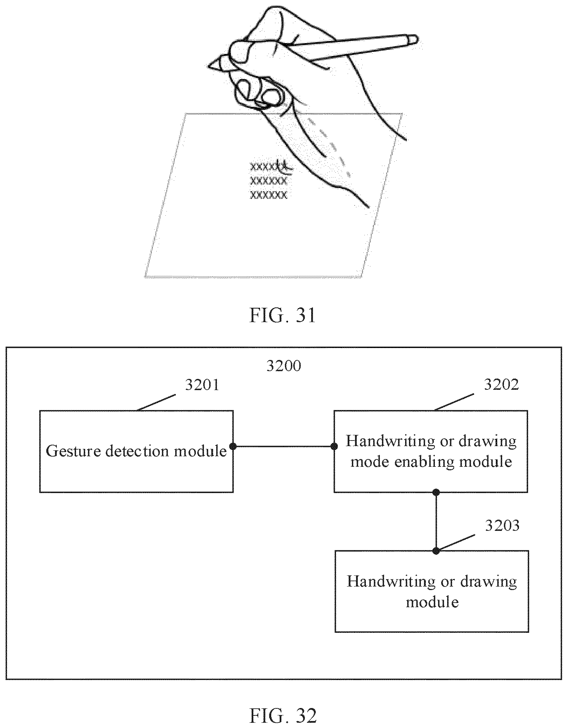

An area of the eraser may be adapted to a size of a touch point set. For example, the touch point set is the eraser. In this way, the eraser may not be displayed. This method is applicable to small-part modification and erasing in which a finger is in contact with the device screen. As shown in FIG. 29, a single finger swipes back and forth on the device screen, so as to modify and delete content in a line area through which the finger swipes. Alternatively, a thenar muscle and a hypothenar muscle of a palm may be used to touch and swipe on the device screen, as shown in FIG. 30 and FIG. 31.

An area of the eraser may alternatively be greater than a touch point set. For example, to help the user better master an erasing position, a virtual eraser may be displayed on the device screen, and an area of the eraser is greater than a touch point set. The virtual eraser may erase an existing handwritten or drawn pattern on a moving path of the virtual eraser.

In a possible implementation, the erasing may be further determined in light of stress detection of the device screen. Only when a downward stress on the device screen is greater than a preset pressure (for example, 2 N), the back-and-forth swipe gesture is considered as an effective erasing gesture.

In a possible implementation, the handwritten or drawn content is content that is handwritten or drawn within a preset period of time before the contact gesture is detected. Generally, the user generates an editing intention such as erasing intention at an occasion when the handwriting or drawing is just finished, and an object to be erased is the newly generated handwritten or drawn content. Therefore, whether the handwritten or drawn content is content that is handwritten or drawn within the preset period of time before the contact gesture is detected is used as a trigger condition of the erasing operation, so that a gesture (for example, a touch by mistake) with which the user does not have an erasing intention may be excluded (that is, not responded to), or a non-erasing gesture may not be recognized as an erasing gesture.

In this embodiment of this application, an erasing intention of the user is guessed by using a set of a plurality of conditions. Regarding an interaction manner, the hand does not need to move in a large range, or a stylus holding state does not need to be changed. This greatly reduces complexity and fatigue of a user operation. In addition, because the interaction manner is close to instinct habits of people, interaction memory burden is small, and creative thinking of the user is coherent. The most important thing is that this interaction manner is similar to the use of chalk (writing on a blackboard with chalk and then erasing with a finger), so that the learning barrier is low.

As shown in FIG. 32, FIG. 32 is a schematic diagram of a structure of an apparatus for displaying handwritten or drawn content according to an embodiment of this application. The apparatus is applied to an electronic device. The electronic device includes a touchscreen, the touchscreen displays a target screen, and the apparatus 3200 includes a gesture detection module 3201, a handwriting or drawing mode enabling module 3202, and a handwriting or drawing module 3203.

The gesture detection module 3201 is configured to detect a contact gesture on the touchscreen.

For description of the gesture detection module 3201, refer to the description of step 301 in the foregoing embodiment. Details are not described herein again.

The handwriting or drawing mode enabling module 3202 is configured to enable a handwriting or drawing mode based on a fact that the contact gesture is a swipe gesture and that the swipe gesture meets a preset condition, where the preset condition includes at least one of the following: duration of the swipe gesture exceeds a threshold, a trace length of the swipe gesture exceeds a threshold, and a trace shape of the swipe gesture is of a preset trace type.

For description of the handwriting or drawing mode enabling module 3202, refer to the description of step 302 in the foregoing embodiment. Details are not described herein again.

The handwriting or drawing module 3203 is configured to detect a handwriting or drawing gesture on the touchscreen, and display, in the target screen, handwritten or drawn content corresponding to the handwriting or drawing gesture.

For description of the handwriting or drawing module 3203, refer to the description of step 303 in the foregoing embodiment. Details are not described herein again.

In a possible implementation, the preset trace type is a circle-type trace or an arrow-type trace.

In a possible implementation, the apparatus further includes:
a display module, configured to display a movement trace of the swipe gesture on the touchscreen based on a contact region of the swipe gesture on the touchscreen.

In a possible implementation, the movement trace includes a start position, a first trace segment, and a second trace segment, where the first trace segment and the second trace segment are different trace segments on the movement trace, a distance between the first trace segment and the start position is less than a distance between the second trace segment and the start position, and display transparency of the first trace segment is lower than display transparency of the second trace segment.

In a possible implementation, the display module is further configured to:
in response to the enabling of the handwriting or drawing mode, stop displaying the movement trace.

In a possible implementation, the apparatus further includes:
a prompt presentation module, configured to present a target prompt in response to the enabling of the handwriting or drawing mode, where the target prompt indicates that the handwriting or drawing mode is enabled, and the target prompt includes at least one of a vibration prompt, a text prompt, a sound prompt, or a picture prompt.

In a possible implementation, the display module is further configured to:
in response to the enabling of the handwriting or drawing mode, keep content displayed in the target screen unchanged.

In a possible implementation, the display module is specifically configured to:
take a screenshot of the content displayed in the target screen to obtain a first image; and
keep the first image displayed in the target screen.

In a possible implementation, the display module is specifically configured to:
display, at an upper layer of the first image, the handwritten or drawn content corresponding to the handwriting or drawing gesture.

The apparatus further includes:
receiving a target instruction, where the target instruction instructs to save the handwritten or drawn content; and
in response to the target instruction, saving the first image and the handwritten or drawn content displayed at the upper layer.

In a possible implementation, the display module is specifically configured to:
obtain pixel information of content that is displayed in the target screen at a target moment; and
fixedly keep, in the target screen, display of the content corresponding to the pixel information.

In a possible implementation, the display module is specifically configured to:
display, at an upper layer of the content corresponding to the pixel information, the handwritten or drawn content corresponding to the handwriting or drawing gesture.

The apparatus further includes:
a saving module, configured to receive a target instruction, where the target instruction instructs to save the handwritten or drawn content; and
in response to the target instruction, take a screenshot of the target screen, and save a second image obtained by taking the screenshot.

In a possible implementation, the target screen is a projected screen.

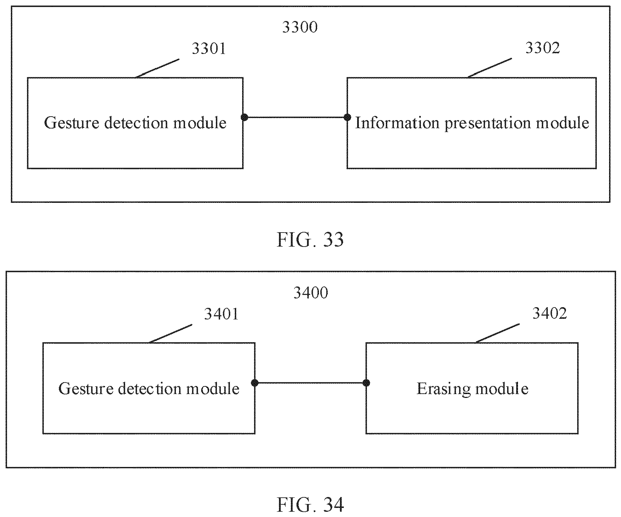

As shown in FIG. 33, FIG. 33 is a schematic diagram of a structure of an apparatus for triggering a screen clearing operation according to an embodiment of this application. The apparatus is applied to an electronic device. The electronic device includes a touchscreen, and the touchscreen displays handwritten or drawn content. The apparatus 3300 includes a gesture detection module 3301 and an information presentation module 3302.

The gesture detection module 3301 is configured to detect a contact gesture on the touchscreen, where the contact gesture is used to clear handwritten or drawn content that overlaps a contact region of the contact gesture from the handwritten or drawn content.

For description of the gesture detection module 3301, refer to the description of step 1901 in the foregoing embodiment. Details are not described herein again.

The information presentation module 3302 is configured to present target information based on a fact that the contact gesture meets a preset condition, where the preset condition includes at least one of the following: the contact region of the contact gesture overlaps the handwritten or drawn content, the contact region of the contact gesture overlaps the handwritten or drawn content, a trace length of the contact gesture exceeds a threshold, and duration of the contact gesture exceeds a threshold, the target information indicates whether to perform the screen clearing operation, and the screen clearing operation is used to clear the handwritten or drawn content displayed on the touchscreen.

For description of the information presentation module 3302, refer to the description of step 1902 in the foregoing embodiment. Details are not described herein again.

In a possible implementation, the apparatus further includes:
a screen clearing module, configured to detect a target gesture of a user on the touchscreen, where the target gesture instructs to perform the screen clearing operation; and
in response to the target gesture, clear the handwritten or drawn content displayed on the touchscreen.

In a possible implementation, the target information indicates an enabling condition for performing the screen clearing operation, and the gesture detection module is specifically configured to:
detect a target gesture that is of the user on the touchscreen and that meets the enabling condition.

In a possible implementation, the enabling condition includes performing a preset quantity of tap gestures on the touchscreen.

As shown in FIG. 34, FIG. 34 is a schematic diagram of a structure of an apparatus for erasing handwritten or drawn content according to an embodiment of this application. The apparatus is applied to an electronic device, the electronic device is connected to a stylus, the electronic device includes a touchscreen, the touchscreen displays handwritten or drawn content, and the apparatus 3400 includes a gesture detection module 3401 and an erasing module 3402.

The gesture detection module 3401 is configured to detect a contact gesture on the touchscreen.

For description of the gesture detection module 3401, refer to the description of step 2801 in the foregoing embodiment. Details are not described herein again.

The erasing module 3402 is configured to: based on a fact that the stylus is in a state of being held by a stylus-holding hand, and that the contact gesture is a gesture generated when the stylus-holding hand swipes back and forth on the touchscreen, clear, based on a contact region of the contact gesture, handwritten or drawn content that overlaps the contact region from the handwritten or drawn content.

For description of the erasing module 3402, refer to the description of step 2802 in the foregoing embodiment. Details are not described herein again.

In a possible implementation, the apparatus further includes:
an obtaining module, configured to obtain a first motion characteristic of the stylus and a second motion characteristic that is generated when the contact gesture swipes back and forth on the touchscreen, where the first motion characteristic and the second motion characteristic are used to indicate a movement speed and/or a movement direction; and
based on a fact that the first motion characteristic is consistent with the second motion characteristic, determine that the stylus is in a state of being held by the stylus-holding hand.

In a possible implementation, a back-and-forth frequency of the back-and-forth swiping is greater than a preset frequency, where the preset frequency is greater than or equal to 3 Hz.

In a possible implementation, a contact pressure between the contact gesture and the touchscreen is greater than a preset pressure.

In a possible implementation, the handwritten or drawn content is content that is handwritten or drawn within a preset period of time before the contact gesture is detected. Generally, a user generates an editing intention such as erasing intention at an occasion when the handwriting or drawing is just finished, and an object to be erased is the newly generated handwritten or drawn content. Therefore, whether the handwritten or drawn content is content that is handwritten or drawn within the preset period of time before the contact gesture is detected is used as a trigger condition of an erasing operation, so that a gesture (for example, a touch by mistake) with which the user does not have an erasing intention may be excluded (that is, not responded to), or a non-erasing gesture may not be recognized as an erasing gesture.

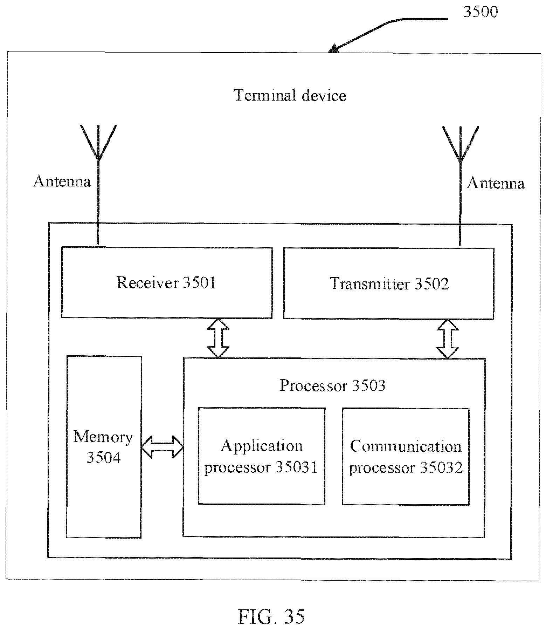

The following describes a terminal device provided in an embodiment of this application. The terminal device may be the apparatus described in FIG. 32, FIG. 33, and FIG. 34. As shown in FIG. 35, FIG. 35 is a schematic diagram of a structure of a terminal device according to an embodiment of this application. A terminal device 3500 may be specifically represented as an electronic whiteboard, a virtual reality VR device, a mobile phone, a tablet, a notebook computer, an intelligent wearable device, or the like. This is not limited herein. Specifically, the terminal device 3500 includes a receiver 3501, a transmitter 3502, a processor 3503, and a memory 3504 (there may be one or more processors 3503 in the terminal device 3500, and one processor is used as an example in FIG. 35.) The processor 3503 may include an application processor 35031 and a communication processor 35032. In some embodiments of this application, the receiver 3501, the transmitter 3502, the processor 3503, and the memory 3504 may be connected by using a bus or in another manner.

The memory 3504 may include a read-only memory and a random access memory, and provide instructions and data for the processor 3503. A part of the memory 3504 may further include a nonvolatile random access memory (nonvolatile random access memory, NVRAM). The memory 3504 stores a processor and operation instructions, an executable module or a data structure, a subnet thereof, or an expanded set thereof. The operation instructions may include various operation instructions to implement various operations.

The processor 3503 controls an operation of the terminal device. In a specific application, components of the terminal device are coupled together by using a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 3503, or may be implemented by the processor 3503. The processor 3503 may be an integrated circuit chip and has a signal processing capability. In an implementation process, the steps in the foregoing methods may be implemented by using a hardware integrated logical circuit in the processor 3503, or by using instructions in a form of software. The processor 3503 may be a general-purpose processor, a digital signal processor (digital signal processor, DSP), a microprocessor, or a microcontroller. The processor 3503 may further include an application-specific integrated circuit (application-specific integrated circuit, ASIC), a field programmable gate array (field programmable gate array, FPGA) or another programmable logic device, a discrete gate or transistor logic device, or a discrete hardware component. The processor 3503 may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and finished by a hardware decoding processor, or may be executed and finished by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 3504, and the processor 3503 reads information in the memory 3504 and completes the steps in the foregoing methods in combination with hardware of the processor 3503. Specifically, the processor 3503 may read information in the memory 3504, and complete, in combination with hardware of the processor 3503, steps 301 to 303 in the foregoing embodiment, steps 1901 and 1902 in the foregoing embodiment, and steps 2801 and 2802 in the foregoing embodiment.

The receiver 3501 may be configured to receive input digital or character information, and generate signal input related to a related setting and function control of the terminal device. The transmitter 3502 may be configured to output digital or character information by using a first interface. The transmitter 3502 may further be configured to send instructions to a disk group by using the first interface, to modify data in the disk group. The transmitter 3502 may further include a display device such as a touchscreen.

An embodiment of this application further provides a computer program product. When the computer program product is run on a computer, the computer is enabled to perform the steps of the methods described in embodiments corresponding to FIG. 3, FIG. 19, and FIG. 28 in the foregoing embodiments.

An embodiment of this application further provides a computer-readable storage medium. The computer-readable storage medium stores a program for signal processing. When the program is run on a computer, the computer is enabled to perform the steps in the image processing method in the foregoing method embodiments.

The image processing apparatus provided in this embodiment of this application may be a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

In addition, it should be noted that the apparatus embodiments described above are merely an example. The units described as separate parts may or may not be physically separate, and parts displayed as units may or may not be physical units, may be located in one position, or may be distributed on a plurality of network units. Some or all the modules may be selected depending on an actual need to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, the procedures or functions according to embodiments of this application are all or partially generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A method for displaying handwritten or drawn content, applied to an electronic device, wherein the electronic device comprises a touchscreen, the touchscreen displays a target screen, and the method comprises:
detecting a contact gesture on the touchscreen;
enabling a handwriting or drawing mode based on the contact gesture is a swipe gesture and the swipe gesture meets a preset condition, wherein the preset condition comprises at least one of the following: duration of the swipe gesture exceeds a threshold, a trace length of the swipe gesture exceeds a threshold, and a trace shape of the swipe gesture is of a preset trace type; and
detecting a handwriting or drawing gesture on the touchscreen, and displaying, in the target screen, handwritten or drawn content corresponding to the handwriting or drawing gesture.

2. The method according to claim 1, wherein the preset trace type is a circle-type trace or an arrow-type trace.

3. The method according to claim 1 or 2, wherein the method further comprises:
displaying a movement trace of the swipe gesture on the touchscreen based on a contact region of the swipe gesture on the touchscreen.

4. The method according to claim 3, wherein the movement trace comprises a start position, a first trace segment, and a second trace segment, the first trace segment and the second trace segment are different trace segments on the movement trace, a distance between the first trace segment and the start position is less than a distance between the second trace segment and the start position, and display transparency of the first trace segment is lower than display transparency of the second trace segment.

5. The method according to claim 3 or 4, wherein the method further comprises:
in response to the enabling of the handwriting or drawing mode, stopping displaying the movement trace.

6. The method according to any one of claims 1 to 5, wherein the method further comprises:
presenting a target prompt in response to the enabling of the handwriting or drawing mode, wherein the target prompt indicates that the handwriting or drawing mode is enabled, and the target prompt comprises at least one of a vibration prompt, a text prompt, a sound prompt, and a picture prompt.

7. The method according to any one of claims 1 to 6, wherein the method further comprises:
in response to the enabling of the handwriting or drawing mode, keeping content displayed in the target screen unchanged.

8. The method according to claim 7, wherein the keeping content displayed in the target screen unchanged comprises:
taking a screenshot of the content displayed in the target screen to obtain a first image; and
keeping the first image displayed in the target screen.

9. The method according to claim 8, wherein the displaying, in the target screen, handwritten or drawn content corresponding to the handwriting or drawing gesture comprises:
displaying, at an upper layer of the first image, the handwritten or drawn content corresponding to the handwriting or drawing gesture; and
the method further comprises:
receiving a target instruction, wherein the target instruction instructs to save the handwritten or drawn content; and
in response to the target instruction, saving the first image and the handwritten or drawn content displayed at the upper layer.

10. The method according to claim 7, wherein the keeping content displayed in the target screen unchanged comprises:
obtaining pixel information of content that is displayed in the target screen at a target moment; and
keeping, in the target screen, display of the content corresponding to the pixel information.

11. The method according to claim 10, wherein the displaying, in the target screen, handwritten or drawn content corresponding to the handwriting or drawing gesture comprises:
displaying, at an upper layer of the content corresponding to the pixel information, the handwritten or drawn content corresponding to the handwriting or drawing gesture; and
the method further comprises:
receiving a target instruction, wherein the target instruction instructs to save the handwritten or drawn content; and
in response to the target instruction, taking a screenshot of the target screen, and saving a second image obtained by taking the screenshot.

12. The method according to any one of claims 1 to 11, wherein the target screen is a projected screen.

13. A method for triggering a screen clearing operation, applied to an electronic device, wherein the electronic device comprises a touchscreen, the touchscreen displays handwritten or drawn content, and the method comprises:
detecting a contact gesture on the touchscreen, wherein the contact gesture is used to clear handwritten or drawn content that overlaps a contact region of the contact gesture from the handwritten or drawn content; and
presenting target information based on a fact that the contact gesture meets a preset condition, wherein the preset condition comprises at least one of the following: the contact region of the contact gesture overlaps the handwritten or drawn content, the contact region of the contact gesture overlaps the handwritten or drawn content, a trace length of the contact gesture exceeds a threshold, and duration of the contact gesture exceeds a threshold, the target information indicates whether to perform the screen clearing operation, and the screen clearing operation is used to clear the handwritten or drawn content displayed on the touchscreen.

14. The method according to claim 13, wherein the method further comprises:
detecting a target gesture of a user on the touchscreen, wherein the target gesture instructs to perform the screen clearing operation; and
in response to the target gesture, clearing the handwritten or drawn content displayed on the touchscreen.

15. The method according to claim 14, wherein the target information indicates an enabling condition for performing the screen clearing operation; and the detecting a target gesture of a user on the touchscreen comprises:
detecting a target gesture that is of the user on the touchscreen and that meets the enabling condition.

16. The method according to claim 15, wherein the enabling condition comprises performing a preset quantity of tap gestures on the touchscreen.

17. A method for erasing handwritten or drawn content, applied to an electronic device, wherein the electronic device is connected to a stylus, the electronic device comprises a touchscreen, the touchscreen displays handwritten or drawn content, and the method comprises:
detecting a contact gesture on the touchscreen; and
based on a fact that the stylus is in a state of being held by a stylus-holding hand, and that the contact gesture is a gesture generated when the stylus-holding hand swipes back and forth on the touchscreen, clearing, based on a contact region of the contact gesture, handwritten or drawn content that overlaps the contact region from the handwritten or drawn content.

18. The method according to claim 17, wherein the method further comprises:
obtaining a first motion characteristic of the stylus and a second motion characteristic indicates the contact gesture that swipes back and forth on the touchscreen, wherein the first motion characteristic and the second motion characteristic are used to indicate a movement speed and/or a movement direction; and
based on a fact that the first motion characteristic is consistent with the second motion characteristic, determining that the stylus is in a state of being held by the stylus-holding hand.

19. The method according to claim 17 or 18, wherein a back-and-forth frequency of the back-and-forth swiping is greater than a preset frequency, and the preset frequency is greater than or equal to 3 Hz.

20. The method according to any one of claims 17 to 19, wherein a contact pressure between the contact gesture and the touchscreen is greater than a preset pressure.

21. The method according to any one of claims 17 to 20, wherein the handwritten or drawn content is content that is handwritten or drawn within a preset period of time before the contact gesture is detected.

22. An electronic device, wherein the device comprises a processor, a memory, a touchscreen, and a bus, wherein
the processor, the memory, and the touchscreen are connected by using the bus;
the memory is configured to store a computer program or instructions; and
the processor is configured to invoke or execute the program or the instructions stored in the memory, and is further configured to control the touchscreen to implement the method steps according to any one of claims 1 to 21.

23. A computer-readable storage medium, comprising a program, wherein when the program is run on a computer, the computer is enabled to perform the method according to any one of claims 1 to 21.

24. A computer program product comprising instructions, wherein when the computer program product is run on a terminal, the terminal is enabled to perform the method according to any one of claims 1 to 21.
